# EUROPEAN PATENT SPECIFICATION

(11) **EP 2 657 307 B1**
(45) Date of publication and mention of the grant of the patent: **19.10.2016**
(21) Application number: 13165056.6
(22) Date of filing: 24.04.2013
(51) Int. Cl.: C09D 11/00, C09D 179/08, H01B 3/30

(54) **Inkjet Ink**
Tintenstrahltinte
Encre à jet d'encre

(30) Priority: 25.04.2012 JP 2012099707
(43) Date of publication of application: 30.10.2013
(73) Proprietor: JNC Corporation, Chiyoda-ku Tokyo 100-8105 (JP)
(72) Inventor: Furuta, Tomotsugu, Ichihara-shi, Chiba 2908551 (JP); Anraku, Hiroshi, Ichihara-shi, Chiba 2908551 (JP); Kikuchi, Ayako, Ichihara-shi, Chiba 2908551 (JP); Tanioka, Satoshi, Ichihara-shi, Chiba 2908551 (JP)
(74) Representative: Wills, Andrew Jonathan

(56) References cited:
- EP-A1- 0 610 929
- EP-A1- 1 577 348
- EP-A1- 2 053 097
- EP-A1- 2 147 948
- US-A1- 2008 003 381
- US-A1- 2011 318 588
- US-A1- 2012 034 455
- US-A1- 2012 088 888

## Description

### Technical Field

The present invention relates to an inkjet ink containing an amide acid derivative having a specific structure or an imidized substance thereof, and a specific mixed solvent in a specific amount. More specifically, the invention relates to, for example, an inkjet ink used for forming an insulating film layer, a polyimide film formed by using the inkjet ink or a substrate for an electronic material having the polyimide film in manufacturing an electronic component, and an electronic component having the substrate for the electronic material.

### Background Art

A patterned cured film is used in an electronics and communication field. Such a patterned cured film has been formed so far by forming a cured film by using a photosensitive material or the like and then carrying out etching or the like. However, formation of the patterned cured film according to the method needs a large amount of various kinds of materials and chemical solutions, such as a photoresist, a developer, an etchant and a stripper, and needs a complicated step. Therefore, the method has been inferior in productivity.

Therefore, a research has been conducted for a method for directly forming a desired patterned cured film according to an inkjet method in recent years. An inkjet ink is used for the inkjet method. Various kinds of inkjet inks have been proposed (Patent literature Nos. 1 and 2). In the inkjet ink, various parameters such as viscosity or surface tension of an ink and a boiling point of a solvent should be optimized in view of jettability, printability and so forth.

The viscosity is generally required to be low in the range of about 1 to 50 mPa·s at a jetting temperature (temperature of the ink during jetting the ink). In particular, jetting pressure is low in a case of inkjet printing according to a piezoelectric system. Therefore, ink jetting may occasionally become quite difficult when the viscosity is increased.

The surface tension is adjusted preferably in the range of 20 to 70 mN/m, further preferably, in the range of 20 to 40 mN/m. If the surface tension is too low, the ink spreads immediately after the ink is jetted from an output port, and formation of good liquid droplets may occasionally become quite difficult. On the contrary, if the surface tension is too high, formation of a meniscus becomes quite difficult. Therefore, jetting may occasionally become quite difficult.

The boiling point of the solvent is preferably in the range of 100 to 300°C, further preferably, in the range of 150 to 270°C. If the boiling point is too low, the solvent in the ink is evaporated, particularly when the ink is warmed and jetted. Thus, the viscosity of the ink is changed, and jetting of the ink may occasionally become quite difficult or a component of the ink may be occasionally solidified. On the contrary, if the boiling point is too high, drying of the ink after printing is too slow, and a cured film having a desired pattern is not obtained in some cases.

In the electronics and communication field, a polyimide film is widely used as the cured film because the polyimide film has an excellent heat resistance and electric insulation (Patent literature Nos. 3 to 5).

Various kinds of inkjet inks for forming the polyimide film have been proposed, such as an ink containing polyimide or an ink containing a polyamide acid that is converted into the polyimide by carrying out heat treatment (Patent literature Nos. 6 to 13).

In the inkjet ink for forming the polyimide film, the resultant polyimide film should have predetermined functions and characteristics as an important matter, in addition to requisite characteristics such as the viscosity and the surface tension as the inkjet ink and the boiling point of the solvent as described above. Various characteristics are required to be within a specific range, for example, electrical characteristics such as volume resistivity, withstand voltage, a dielectric constant and a dielectric loss, mechanical characteristics such as properties by a bending test, an elastic modulus and tensile elongation, chemical stability such as acid resistance, alkali resistance and plating resistance, and thermal characteristics such as a thermal decomposition temperature, a glass transition temperature and a coefficient of linear thermal expansion. Furthermore, secondary characteristics are also required, such as adhesiveness with a substrate, resistance to warpage caused by shrinkage during film formation, and migration resistance. Moreover, patternability and storage stability are also required for the inkjet ink.

The polyimide has been widely used for an electronic material application as a resin for forming a film that is excellent in the electrical, mechanical, chemical and thermal characteristics. However, various restrictions are applied upon preparing the inkjet ink for forming the polyimide film, and preparation of an inkjet ink having the characteristics described above with a sufficient balance has not been easy. In particular, preparation of an inkjet ink having an excellent patternability or storage stability has not been easy.

In order to prepare the inkjet ink having the excellent patternability or storage stability, selection of a solvent to be used is thought to be important. However, the solvent to be used has been so far limited in the inkjet ink for forming the polyimide film in view of solubility of the polyimide or polyamide acid to be dissolved. For example, 1-methyl-2-pyrrolidone, N,N-dimethylacetamide, N,N-diethylacetamide or N, N-dimethylpropionamide as a good solvent for the polyamide acid or polyimide has been used. However, with regard to the solvents, toxicity such as skin irritation, eye irritation and carcinogenicity is relatively high, and a solvent to be a substitute is strongly required in recent years.

On the other hand, dimethyl sulfoxide (DMSO) is also generally applied as a solvent of polyimide or polyamide acid (Patent literature No. 14 and 15). The toxicity is low, but a relatively high melting point of 18°C is problematic. In particular, when thermally unstable polyamide acid is used, cold storage in the range of -20 to 0°C is needed, but DMSO may be occasionally frozen during cold storage, and thus is quite difficult to be industrially used satisfactorily.

In the inkjet ink for forming the polyimide film as prepared by using the solvents described above, controlling has not been easy for the viscosity, the surface tension, the patternability, the storage stability and the toxicity of the ink, and for the requisite characteristics of the resultant polyimide film.

### Citation List

### Patent Literature

Patent literature No. 1: JP 2003-213165 A.
Patent literature No. 2: JP 2006-131730 A.
Patent literature No. 3: JP 2000-039714 A.
Patent literature No. 4: JP 2003-238683 A.
Patent literature No. 5: JP 2004-094118 A.
Patent literature No. 6: JP 2009-35700 A.
Patent literature No. 7: WO 2008/123190 A.
Patent literature No. 8: JP 2009-144138 A.
Patent literature No. 9: WO 2008/059986 A.
Patent literature No. 10: JP 2009-203440 A.
Patent literature No. 11: JP 2009-221309 A.
Patent literature No. 12: JP 2009-120811 A.
Patent literature No. 13: JP 2010-189631 A.
Patent literature No. 14: JP S60-210630 A.
Patent literature No. 15: JP S59-164328 A

### Summary of Invention

### Technical Problem

An object of the invention is to provide an inkjet ink having a good jettability and storage stability, allowing drawing of a desired pattern, and having a low toxicity.

Another object of the invention is to provide an inkjet ink for forming a polyimide film, in which parameters such as viscosity and surface tension, and a boiling point of a solvent can be easily optimized so as to compose an ink having an excellent jettability, printability and so forth, and toxicity is low.

### Solution to Problem

The present inventors have diligently conducted research in order to solve the problems. As a result, the present inventors have found that the problems can be solved by composing an inkjet ink containing an amide acid derivative having a specific structure or an imidized substance thereof, and a specific mixed solvent having a specific amount ratio, and thus have completed the invention. More specifically, the invention includes items described below.
Item 1. An inkjet ink, containing component (A) including at least one kind of amide acid derivative selected from the group of compound (1) having a constitutional unit represented by formula (1a) below and having at least one kind of molecular terminal group selected from the group of groups represented by formulas (1b) and (1c) below, and compounds represented by formulas (2) to (5) below, or an imidized substance of the amid acid derivative, and solvent (B) and solvent (C), wherein solvent (B) is dimethyl sulfoxide, solvent (C) is at least one kind of solvent selected from diethylene glycol ethylmethyl ether, triethylene glycol dimethyl ether and γ-butyrolactone, and solvent (B) is included in the range of 10 to 30% by weight based on 100% by weight of a total of solvent (B) and solvent (C). 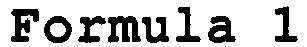 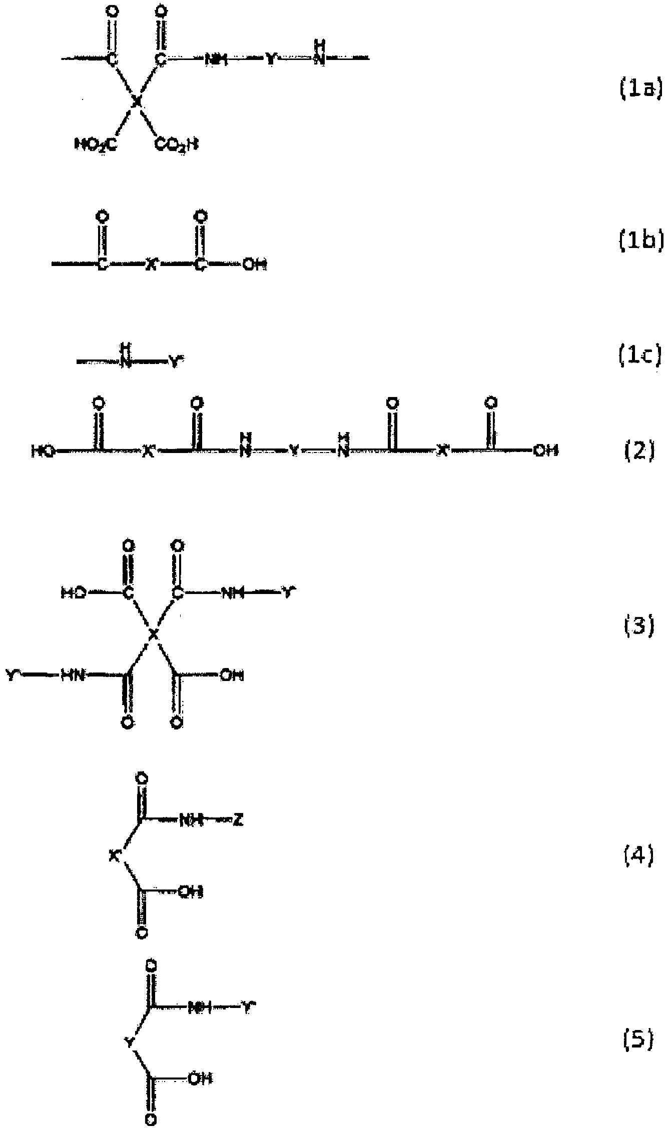 wherein, in formulas (1a) and (3), X is each independently carbon or an organic group having 2 to 100 carbons, in formulas (1a), (2) and (5), Y is each independently an organic group having 1 to 100 carbons, in formula (4), Z is an organic group having 1 to 100 carbons, in formulas (1b), (2) and (4), X' is each independently an organic group having 1 to 100 carbons, and in formulas (1c), (3) and (5), Y' is each independently an organic group having 1 to 100 carbons.
Item 2. The inkjet ink according to item 1, wherein the compound (1) is at least one kind of compound selected from the group of compounds represented by formulas (1-1) to (1-3) below. 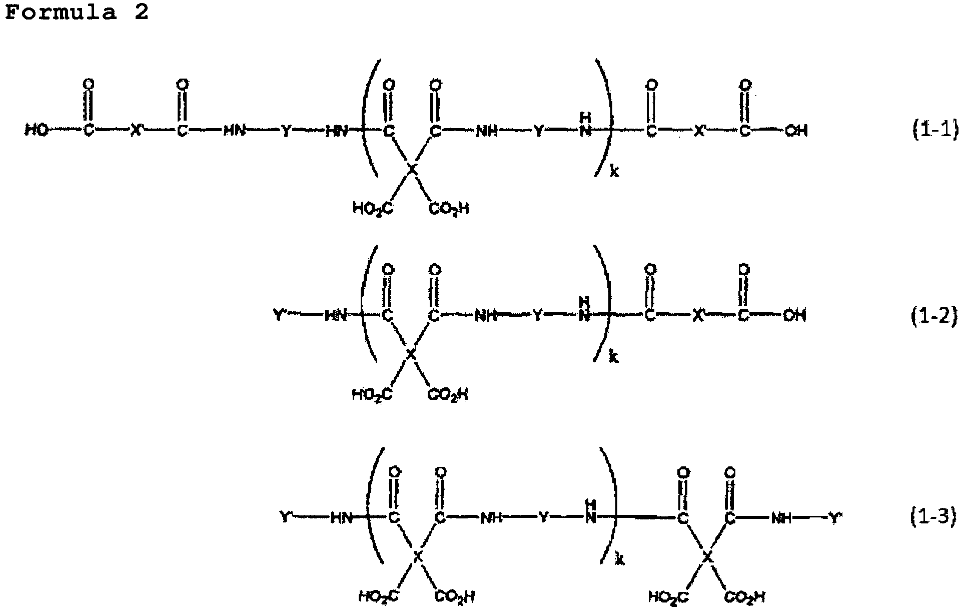 wherein, in formulas (1-1) to (1-3), X is each independently carbon or an organic group having 2 to 100 carbons, in formulas (1-1) to (1-3), Y is each independently an organic group having 1 to 100 carbons, in formulas (1-1) and (1-2), X' is each independently an organic group having 1 to 100 carbons, in formulas (1-2) and (1-3), Y' is each independently an organic group having 1 to 100 carbons, and in formulas (1-1) to (1-3), k is each independently an integer from 1 to 8.
Item 3. The inkjet ink according to item 1 or 2, wherein X' in the formulas (1b), (2), (4), (1-1) and (1-2) is each independently an organic group having an unsaturated hydrocarbon group and having 2 to 100 carbons, or an organic group represented by formula (α) below, and
   Y' in formulas (1c), (3), (5), (1-2) and (1-3) below is each independently an organic group having an unsaturated hydrocarbon group and having 2 to 100 carbons, or an organic group represented by formula (β) below. 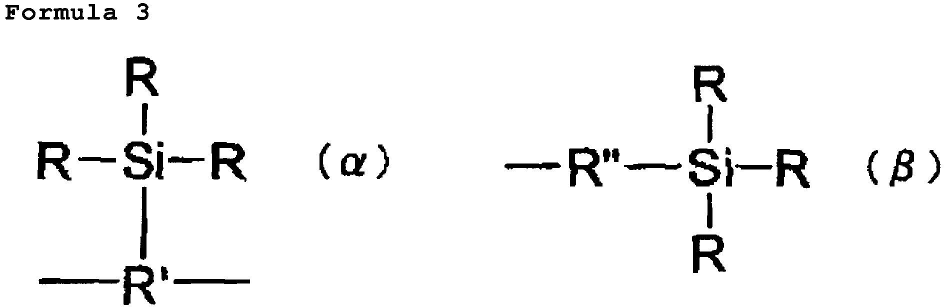 wherein, in formulas (α) and (β), R is each independently hydrogen, alkyl having 1 to 20 carbons or alkoxy having 1 to 20 carbons, in formula (α), R' is an organic group having 1 to 20 carbons, and in formula (β), R" is an organic group having 1 to 20 carbons.
Item 4. The inkjet ink according to any one of items 1 to 3, further containing solvent (D) other than solvent (B) and solvent (C).
Item 5. The inkjet ink according to any one of items 1 to 4, wherein the component (A) is contained in an amount in the range of 5 to 95% by weight based on 100% by weight of the inkjet ink.
Item 6. A polyimide film formed using the inkjet ink according to any one of items 1 to 5.
Item 7. A method for manufacturing a polyimide film, including a step for forming a coat by coating the inkjet ink according to any one of items 1 to 5 on a support according to an inkjet method, and a step for forming the polyimide film by curing the coat.
Item 8. A polyimide film formed according to the method for manufacturing the polyimide film according to item 7.
Item 9. The polyimide film according to item 6 or 8, wherein the polyimide film is patterned.
Item 10. A substrate for an electronic material, having the polyimide film according to item 6, 8 or 9.
Item 11. An electronic component, having the substrate for the electronic material according to item 10.

### Advantageous Effects of Invention

According to the invention, an inkjet ink having a good jettability and storage stability, allowing drawing of a desired pattern, and having a low toxicity can be obtained. According to the invention, parameters such as viscosity or surface tension of the inkjet ink, and a boiling point of a solvent can also be easily optimized so as to compose an ink having an excellent jettability, printability and so forth.

If the inkjet ink of the invention is used, a patterned polyimide film can also be formed by drawing a pattern only in a required part according to an inkjet method. Thus, a wide variety of polyimide films in a large amount can be easily produced without needing a use of a photoresist, an etchant or the like that has been used so far upon forming a patterned polyimide film, and by allowing reduction of the number of steps needed for manufacture.

### Description of Embodiments

### 1. Inkjet ink

An inkjet ink of the invention (hereinafter, referred to also as "ink of the invention") is not particularly limited, if the inkjet ink contains component (A) including an amide acid derivative described below or an imidized substance thereof, and a mixed solvent including solvent (B) and solvent (C) in a specific amount.

In the ink of the invention, parameters such as viscosity or surface tension, and a boiling point of a solvent are preferably optimized in view of jettability, printability and so forth.

In addition, the ink of the invention may further contain, when necessary, solvent (D), and may also contain, when necessary, other additives in the range in which advantageous effects of the invention are not adversely affected. In addition, the ink of the invention may be either colorless or colored.

### 1.1. Component (A)

Component (A) contains amide acid derivative (A1) or imidized substance (A2) thereof. Component (A) may consist essentially of amide acid derivative (A1) or imidized substance (A2), or may include amide acid derivative (A1) and imidized substance (A2). Amide acid derivative (A1) contained in component (A) may be used alone or in combination with two or more kinds. Moreover, imidized substances (A2) contained in component (A) may also be used alone or in combination with two or more kinds.

### 1.1-1. Amide acid derivative (A1)

The amide acid derivative (A1) is at least one kind of compound selected from the group of compound (1) having a constitutional unit represented by formula (1a) below and having at least one kind of molecular terminal group selected from the group of groups represented by formulas (1b) and (1c) below, and compounds represented by formulas (2) to (5) below.

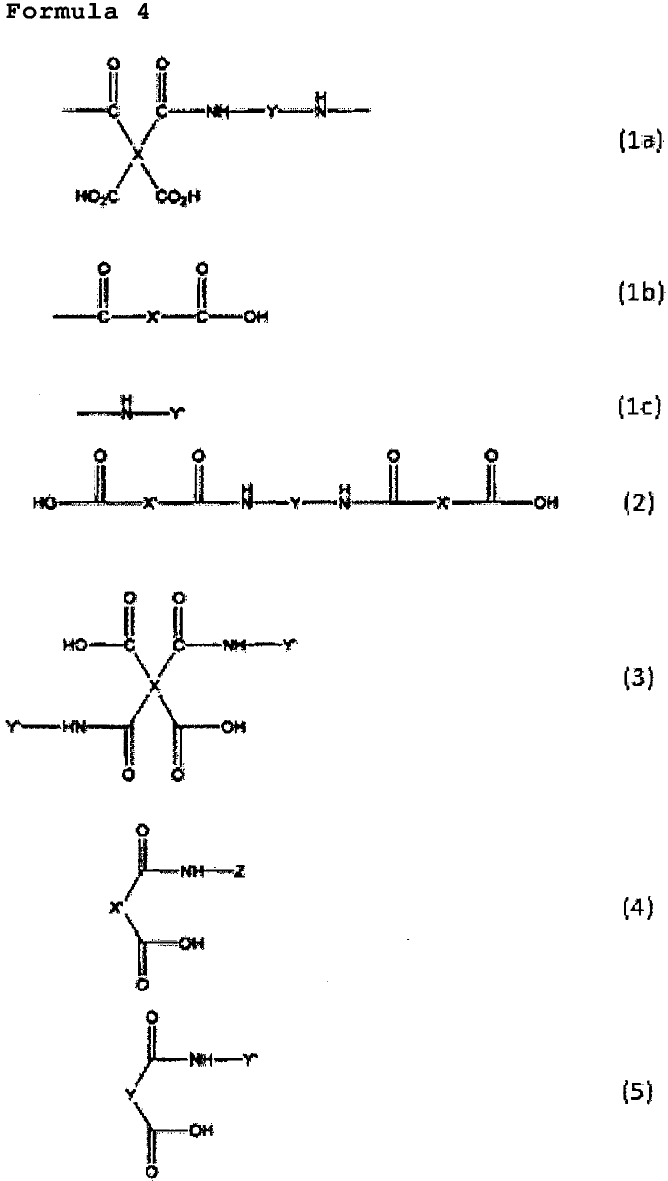

In the formulas (1a) and (3), X is each independently carbon or an organic group having 2 to 100 carbons, in formulas (1a), (2) and (5), Y is each independently an organic group having 1 to 100 carbons, in formula (4), Z is an organic group having 1 to 100 carbons, in formulas (1b), (2) and (4), X' is each independently an organic group having 1 to 100 carbons, and in formulas (1c), (3) and (5), Y' is each independently an organic group having 1 to 100 carbons.

In the formulas (1a) and (3), X is each independently carbon or an organic group having 2 to 100 carbons. Specific examples of the organic group having 2 to 100 carbons include a hydrocarbon group having 2 to 100 carbons, preferably, a hydrocarbon group having 2 to 50 carbons, further preferably, a hydrocarbon group having 2 to 40 carbons.

In addition, a description "in the formulas (1a) and (3), X is each independently" means that, in the formulas, X present in two of arbitrary formulas may be identical or different. The rule also applies to any other formula.

In the formulas (1a), (2) and (5), Y is each independently an organic group having 1 to 100 carbons. Specific examples of the organic group having 1 to 100 carbons include a hydrocarbon group having 1 to 100 carbons, preferably, a hydrocarbon group having 1 to 50 carbons, further preferably, a hydrocarbon group having 1 to 40 carbons.

In the formula (4), Z is an organic group having 1 to 100 carbons. Specific examples of the organic group having 1 to 100 carbons include a hydrocarbon group having 1 to 100 carbons, preferably, a hydrocarbon group having 1 to 50 carbons, further preferably, a hydrocarbon group having 1 to 40 carbons.

In the formulas (1b), (2) and (4), X' is each independently an organic group having 1 to 100 carbons, preferably, an organic group having an unsaturated hydrocarbon group and having 2 to 100 carbons, or an organic group represented by formula (α) below. Specific examples of the organic group having 1 to 100 carbons include a hydrocarbon group having 1 to 100 carbons, preferably, a hydrocarbon group having 1 to 50 carbons, further preferably, a hydrocarbon group having 1 to 40 carbons.

Specific examples of the unsaturated hydrocarbon group herein include alkenyl, alkynyl, cycloalkynyl, alkenylene, alkynylene, cycloalkenylene, alkyldienyl, acryl and methacryl.

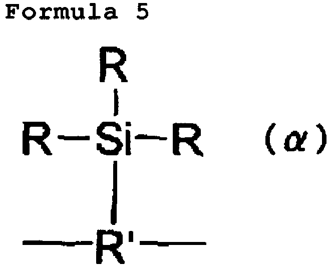

In the formula (α), R is independently hydrogen, alkyl having 1 to 20 carbons or alkoxy having 1 to 20 carbons, and at least one of R is preferably alkoxy.

R' in the formula (α) is an organic group having 1 to 20 carbons. Specific examples of the organic group having 1 to 20 carbons include a hydrocarbon group having 1 to 20 carbons.

The compound represented by the formula (2) has a plurality of X'. In the above case, two of arbitrary X' may be identical or different. The rule also applies to any other formula.

In the formulas (1c), (3) and (5), Y' is each independently an organic group having 1 to 100 carbons, preferably, an organic group having an unsaturated hydrocarbon group and having 2 to 100 carbons, or an organic group represented by formula (β) below. Specific examples of the organic group having 1 to 100 carbons include a hydrocarbon group having 1 to 100 carbons, preferably, a hydrocarbon group having 1 to 50 carbons, further preferably, a hydrocarbon group having 1 to 40 carbons.

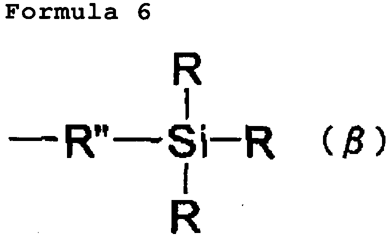

In the formula (β), R is independently hydrogen, alkyl having 1 to 20 carbons or alkoxy having 1 to 20 carbons, and at least one of R is preferably alkoxy.

R" in the formula (β) is an organic group having 1 to 20 carbons. Specific examples of the organic group having 1 to 20 carbons include a hydrocarbon group having 1 to 20 carbons.

In the hydrocarbon group herein, arbitrary -CH₂- of the hydrocarbon group may be replaced by -O-, -CO-, -COO-, -OCO-, -NR-(wherein R is hydrogen, methyl, ethyl, ethoxy or methoxy), -CONH-, -NHCO-, -S-, -S-S-, -SO₂-, -SiRR'- (wherein R and R' are each independently hydrogen, methyl, ethyl, propyl or phenyl) or >P(=O)R (wherein R is hydrogen, methyl, ethyl, hydroxyl, ethoxy or methoxy), arbitrary -(CH₂)₂- may be replaced by -CH=CH-, -C=Cor -N=N-, and arbitrary hydrogen may be replaced by halogen.

The hydrocarbon group herein may be a saturated or unsaturated acyclic hydrocarbon group, a saturated or unsaturated cyclic hydrocarbon group, and a group including both of the acyclic hydrocarbon group and the cyclic hydrocarbon group. The acyclic hydrocarbon group may have a straight chain or a branched chain.

Moreover, an arbitrary carbon atom constituting a ring may be replaced by an oxygen atom, a nitrogen atom, a sulfur atom or P(=O). Specifically, arbitrary -CH₂- constituting the ring may be replaced by -O-, -N=, -S- or >P(=O)R (wherein R is hydrogen, methyl, ethyl, hydroxyl, ethoxy or methoxy), and arbitrary -CH=CH- may be replaced by -N=N- or -CH=N-.

"Arbitrary" used in the invention means any of numbers and also positions, but replacement of a plurality of consecutive -CH₂-, -(CH₂)₂- or the like by an identical group is not preferred. A substituent having an unclear bonding position with carbon constituting the ring means that a bonding position of the substituent is free within the range in which the bonding position is not problematic chemically.

Hereinafter, unless otherwise noted herein, the constitutional units represented by identical symbols such as (1a) and (2), and the definitions of symbols such as X and Y in the group and the compound are identical.

In addition, specific examples of a monovalent hydrocarbon group will be shown below. Specific examples of a divalent, trivalent or tetravalent hydrocarbon group herein include a divalent, trivalent or tetravalent group derived from the groups in hydrocarbon groups shown below as examples.

Specific examples of the hydrocarbon group include alkyl, alkenyl, alkynyl, alkyldienyl, aryl, alkylaryl, arylalkyl, cycloalkyl, cycloalkenyl, alkoxy, aryloxy, amino, silyl, alkylthio, alkylsulfonyl, arylthio and arylsulfonyl.

Specific examples of the alkyl include methyl, ethyl, propyl, isopropyl, n-butyl, sec-butyl, tert-butyl, pentyl, hexyl and dodecanyl (dodecyl).

Specific examples of the alkenyl include vinyl, allyl, propenyl, isopropenyl, 2-methyl-1-propenyl, 2-methylallyl and 2-butenyl.

Specific examples of the alkynyl include ethynyl, propynyl and butynyl.

Specific examples of the alkyldienyl include 1,3-butadienyl.

Specific examples of the aryl include phenyl, 1-naphthyl, 2-naphthyl, indenyl, biphenylyl, anthryl and phenanthryl.

Specific examples of the alkylaryl include o-tolyl, m-tolyl, p-tolyl, 2,3-xylyl, 2,4-xylyl, 2,5-xylyl, o-cumenyl, m-cumenyl, p-cumenyl and mesityl.

Specific examples of the arylalkyl include benzyl, phenethyl, diphenylmethyl, triphenylmethyl, 1-naphthylmethyl, 2-naphthylmethyl, 2,2-diphenylethyl, 3-phenylpropyl, 4-phenylbutyl and 5-phenylpentyl.

Specific examples of the cycloalkyl include cyclopropyl, cyclobutyl, cyclopentyl and cyclohexyl.

Specific examples of the cycloalkenyl include cyclopropenyl, cyclobutenyl, cyclopentenyl and cyclohexenyl.

Specific examples of the alkoxy include ethoxy, propoxy, butoxy and pentyloxy.

Specific examples of the aryloxy include phenyloxy, naphthyloxy and biphenyloxy.

Specific examples of the amino include amino, dimethylamino, methylamino, methylphenylamino and phenylamino.

Specific examples of the silyl include dimethylsilyl, diethylsilyl, trimethylsilyl, triethylsilyl, trimethoxysilyl, triethoxysilyl, diphenylmethylsilyl, triphenylsilyl, triphenoxysilyl, dimethylmethoxysilyl and dimethylphenoxysilyl.

Specific examples of the alkyl in the alkylthio and the alkylsulfonyl include methyl, ethyl, propyl, isopropyl, n-butyl, sec-butyl, tert-butyl, pentyl, hexyl and dodecanyl (dodecyl).

Specific examples of the aryl in the arylthio and the arylsulfonyl include phenyl, 1-naphthyl, 2-naphthyl, indenyl, biphenylyl, anthryl and phenanthryl.

In addition, compound (1) is a polyamide acid derivative having a constitutional unit represented by the formula (1a) and at least one kind of molecular terminal group selected from the group of groups represented by the formulas (1b) and (1c).

The molecular terminal group is present at a (main chain) terminal of compound (1).

The constitutional unit represented by the formula (1a) can be obtained, for example, by allowing diamine to react with tetracarboxylic dianhydride as described later.

Moreover, the molecular terminal group represented by the formula (1b) can be obtained, for example, by allowing diamine to react with dicarboxylic anhydride as described later.

Furthermore, the molecular terminal group represented by the formula (1c) can be obtained, for example, by allowing monoamine to react with tetracarboxylic dianhydride as described later.

Compound (1) is not particularly limited, if compound (1) is chemically allowed. Specific examples include; (I) a compound in which either one of two terminals in the main chain is a group represented by the formula (1b) or a group represented by the formula (1c) ; (II) a compound in which both of two terminals in the main chain are a group represented by the formula (1b) or a group represented by the formula (1c); and (III) a compound in which one of two terminals in the main chain is a group represented by the formula (1b) and the other is a group represented by the formula (1c).

The compound (1) preferably includes at least one kind of compound selected from the group of compounds represented by formulas (1-1) to (1-3) below among the compounds.

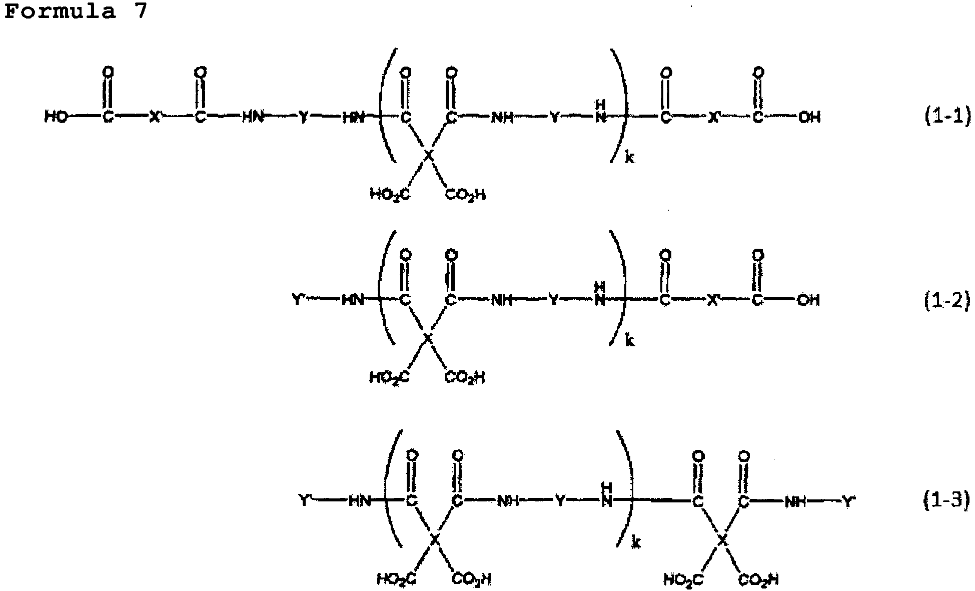

In the formulas (1-1) to (1-3), X is each independently defined in a manner identical with the definitions of X in formulas (1a) and (3), in formulas (1-1) to (1-3), Y is each independently defined in a manner identical with the definitions of Y in formulas (1a), (2) and (5), in formulas (1-1) and (1-2), X' is each independently defined in a manner identical with the definitions of X' in the formulas (1b), (2) and (4), and in formulas (1-2) and (1-3), Y' is each independently defined in a manner identical with the definitions of Y' in formulas (1c), (3) and (5).

In the formulas (1-1) to (1-3), k is each independently an integer from 1 to 8, preferably, an integer from 1 to 5, further preferably, an integer from 1 to 3.

Specific examples of the amide acid derivative (A1) include a compound obtained by using diamine and a compound having two or more acid anhydride groups. Preferred examples include a polyamide acid having a constitutional unit represented by formula (1a) below and having at least one kind of molecular terminal group selected from the group of groups represented by formula (1b) and formula (1c) below as described in JP 2009-35700 A.

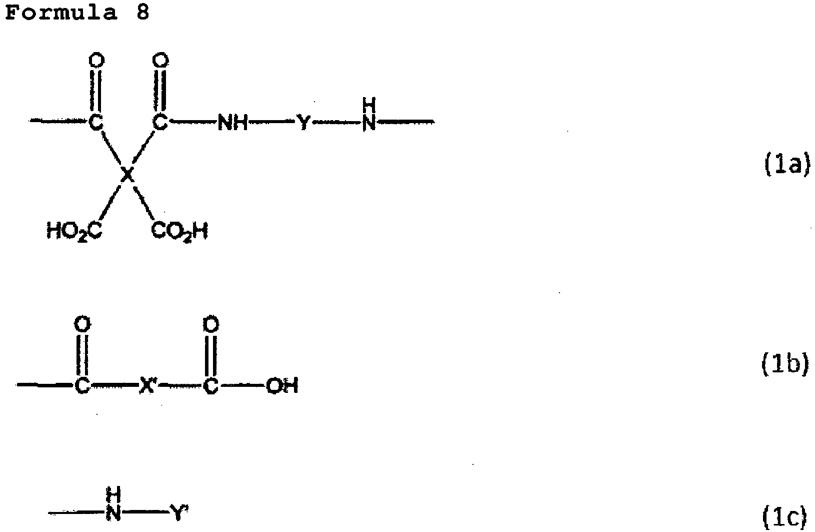

Specific examples of the amide acid derivative (A1) also include a compound having at least one amide acid structure in a molecule. Preferred examples include a compound represented by formula (2) or formula (3) below as described in WO 2008/123190 A, and a compound represented by formula (5) below as described in JP 2009-144138 A.

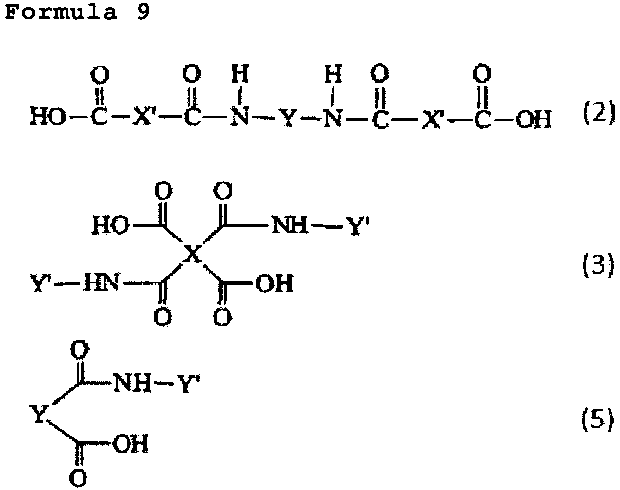

### 1.1-2. Imide compound (A2)

The imidized substance (A2) is an imidized substance of the amide acid derivative (A1). The imidized substance (A2) may be a compound in which the amide acid derivative (A1) is wholly or partially imidized.

Specific examples of the imidized substance (A2) include an imidized substance as a compound represented by formula (2) below, and an alkenyl-substituted nadimide compound having at least one alkenyl-substituted nadimide structure in a molecule.

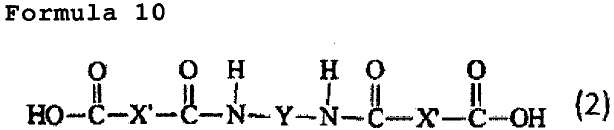

Preferred examples of the alkenyl-substituted nadimide compound include an alkenyl-substituted nadimide compound represented by formula (6) below as described in WO 2008/059986 A, and an alkenyl-substituted nadimide compound as described in JP 2009-203440 A.

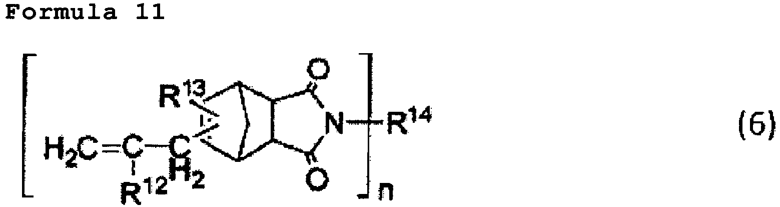

In formula (6), R¹² and R¹³ are each independently hydrogen, alkyl having 1 to 12 carbons, alkenyl having 3 to 6 carbons, cycloalkyl having 5 to 8 carbons, aryl having 6 to 12 carbons or benzyl, and n is 1 or 2.

When n in the formula (6) is 1, R¹⁴ is hydrogen, alkyl having 1 to 12 carbons, hydroxyalkyl having 1 to 12 carbons, cycloalkyl having 5 to 8 carbons, aryl having 6 to 12 carbons, benzyl, a group represented by - {(C_{q}H_{2q})Oₜ(CᵣH₂ᵣO)ᵤCₛH₂ₛX} (wherein q, r and s are each independently an integer from 2 to 6, t is an integer of 0 or 1, u is an integer from 1 to 30, and X is hydrogen or hydroxyl), a group represented by -(R)ₐ-Ph-R¹⁵ (wherein a is an integer of 0 or 1, R is alkylene having 1 to 4 carbons, Ph is phenylene, and R¹⁵ is hydrogen or alkyl having 1 to 4 carbons), or a group represented by -Ph-T-Ph (wherein Ph is phenyl or phenylene, and T is -CH₂-, -C(CH₃)₂-, -CO-, -S- or -SO₂-), in which one to three of hydrogen bonded with Ph in the groups may be replaced by hydroxyl.

When n in the formula (6) is 2, R¹⁴ is alkylene represented by -CₚH₂ₚ- (wherein p is an integer from 2 to 20), cycloalkylene having 5 to 8 carbons, a group represented by - {(C_{q}H_{2q}O)ₜ(CᵣH₂ᵣO)ᵤCₛH₂ₛ} - (wherein q, r and s are each independently an integer from 2 to 6, t is an integer of 0 or 1, and u is an integer from 1 to 30), arylene having 6 to 12 carbons, a group represented by -(R¹⁵)ₐ-Ph-R¹⁶- (wherein Ph is phenylene, a is an integer of 0 or 1, and R¹⁵ and R¹⁶ are each independently alkylene having 1 to 4 carbons), or a group represented by -Ph-T-Ph- (wherein Ph is phenylene, and T is -CH₂-, -C(CH₃)₂-, -CO-, -O-, -O-Ph-C(CH₃)₂-Ph-O-, -S- or -SO₂-), in which one to three of hydrogen bonded with Ph in the groups may be replaced by hydroxyl.

### 1.1-3. Method for synthesizing amide acid derivative (A1) or imidized substance (A2)

The amide acid derivative (A1) can be obtained preferably by allowing at least one kind of amine selected from the group of diamine represented by formula (8) below and monoamine represented by formula (10) below to react with at least one kind of acid anhydride selected from the group of tetracarboxylic dianhydride represented by formula (7) below and dicarboxylic anhydride represented by formula (9) below.

The reaction is preferably carried out in a reaction solvent described below.

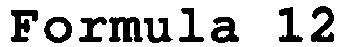

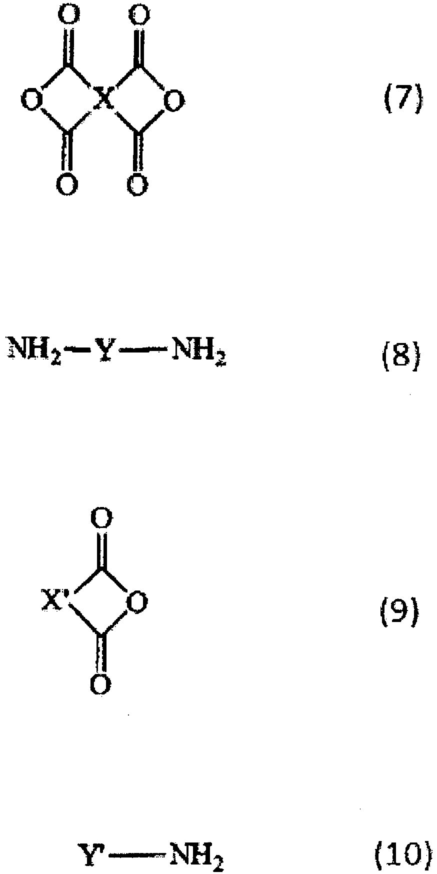

X in the formula (7) is each independently carbon or an organic group having 2 to 100 carbons, Y in the formula (8) is each independently an organic group having 1 to 100 carbons, X' in the formula (9) is each independently an organic group having 1 to 100 carbons, and Y' in the formula (10) is each independently an organic group having 1 to 100 carbons.

### 1.1-3-1. Tetracarboxylic dianhydride

Specific examples of the tetracarboxylic dianhydride represented by the formula (7) include pyromellitic dianhydride, 3,3',4,4'-benzophenone tetracarboxylic dianhydride, 2,2',3,3'-benzophenone tetracarboxylic dianhydride, 2,3,3',4'-benzophenone tetracarboxylic dianhydride, 3,3',4,4'-diphenylsulfone tetracarboxylic dianhydride, 2,2',3,3'-diphenylsulfone tetracarboxylic dianhydride, 2,3,3',4'-diphenylsulfone tetracarboxylic dianhydride, 3,3',4,4'-diphenylether tetracarboxylic dianhydride, 2,2',3,3'-diphenylether tetracarboxylic dianhydride, 2,3,3',4'-diphenylether tetracarboxylic dianhydride, 2,2-[bis(3,4-dicarboxyphenyl)]hexafluoropropane dianhydride (abbreviation: 6FDA), ethyleneglycol bis(anhydrotrimellitate), 4,4'-[(isopropylidene)bis(p-phenyleneoxy]diphthalic dianhydride (abbreviation: BSAA), cyclobutane tetracarboxylic dianhydride, methylcyclobutane tetracarboxylic dianhydride, cyclopentane tetracarboxylic dianhydride, 1,2,4,5-cyclohexane tetracarboxylic dianhydride, ethane tetracarboxylic dianhydride, butane tetracarboxylic dianhydride, 3,3',4,4'-biphenyl tetracarboxylic dianhydride and 3,3',4,4'-bicyclohexyl tetracarboxylic dianhydride (abbreviation: BPDA-H).

Among types of the tetracarboxylic dianhydride, 6FDA, BSAA or BPDA-H is preferred in view of solubility of the resultant ink in the solvent described below (containing solvent (B) and solvent (C), and when necessary, solvent (D)), and so forth.

The tetracarboxylic dianhydride may be used alone or in combination with two or more kinds.

### 1.1-3-2. Diamine

Specific examples of the diamine represented by the formula (8) include 3,3'-diaminodiphenyl sulfone (abbreviation: DDS), 4,4'-diaminodiphenyl ether, 3,3'-diaminodiphenyl methane, 4,4'-diaminodiphenyl methane, 2,2'-diaminodiphenyl propane, 3,3'-dimethyl-4,4'-diaminodiphenyl methane, 2,2-bis[4-(4-aminophenoxy)phenyl]propane (abbreviation: BAPP), 2,2-bis[4-(4-aminophenoxy)phenyl]hexafluoropropane (abbreviation: HFBAPP), m-phenylenediamine, p-phenylenediamine, m-xylylenediamine, p-xylylenediamine, benzidine, 1,1-bis[4-(4-aminophenoxy)phenyl]cyclohexane, 1,1-bis[4-(4-aminophenoxy)phenyl]-4-methylcyclohexane, 1,1-bis[4-(4-aminobenzyl)phenyl]cyclohexane, 1,1-bis[4-(4-aminobenzyl)phenyl]-4-methylcyclohexane, 1,1-bis[4-(4-aminobenzyl)phenyl]methane, 1,3-bis(4-aminophenoxy)benzene, diethylene glycol bis(3-aminopropyl)ether (abbreviation: BAPEE), isophorone diamine (abbreviation: IPDA) and a compound represented by formula (11) below.

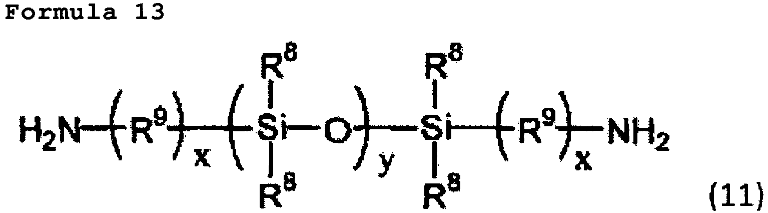

In the formula (11), R⁸ is independently alkyl having 1 to 3 carbons or phenyl, R⁹ is independently methylene or phenylene, arbitrary hydrogen of the phenylene may be replaced by alkyl, x is independently an integer from 1 to 6, and y is an integer from 1 to 70.

Furthermore, specific examples of the diamine of the invention include dimer diamine.

The dimer diamine is obtained, for example, by a reductive amination reaction of dimer acid. The reaction can be carried out according to a publicly known method (example: JP H9-12712 A), such as a reduction method using ammonia and a catalyst.

The dimer acid means dibasic acid obtained by dimerization of unsaturated fatty acid by an intermolecular polymerization reaction or the like. Although a degree depends on synthetic conditions and purification conditions, a small amount of monomer acid, trimer acid or the like is ordinarily contained in addition to dimer acid. After the reaction, a double bond remains in the resultant molecule, but dimer acid according to the invention is defined with including a material formed into saturated dibasic acid in which the double bond present in the molecule is reduced by a hydrogenation reaction.

The dimer acid is obtained, for example, by polymerizing unsaturated fatty acid using Lewis acid and Broensted acid as a catalyst. The dimer acid can be manufactured according to a publicly known method (example: JP H9-12712 A).

Specific examples of the unsaturated fatty acid include crotonic acid, myristoleic acid, palmitoleic acid, oleic acid, elaidic acid, vaccenic acid, gadoleic acid, eicosenic acid, erucic acid, nervonic acid, linolic acid, pinolenic acid, eleostearic acid, mead acid, dihomo-γ-linolenic acid, eicosatrienoic acid, stearidonic acid, arachidic acid, eicosatetraenoic acid, adrenic acid, bosseopentaenoic acid, Osbond acid, clupanodonic acid, tetracosapentaenoic acid, docosahexaenoic acid and Nisinic acid. The number of carbons of unsaturated fatty acid is ordinarily 4 to 24, preferably, 14 to 20.

For example, when manufacturing dimer acid using linolic acid, a mixture obtained generally contains dimer acid having 36 carbons as a main component, but also generally contains a small amount of monomer acid having 18 carbons and trimer acid having 54 carbons as an accessory component, and includes various structures of raw material origin.

Dimer diamine includes one kind of compound or a mixture of two or more kinds of compounds having structures represented by formulas (a) to (e) below. Dimer diamine (a1) may be hydrogenated, and for example, has a structure represented by formula (c) or (e) below.

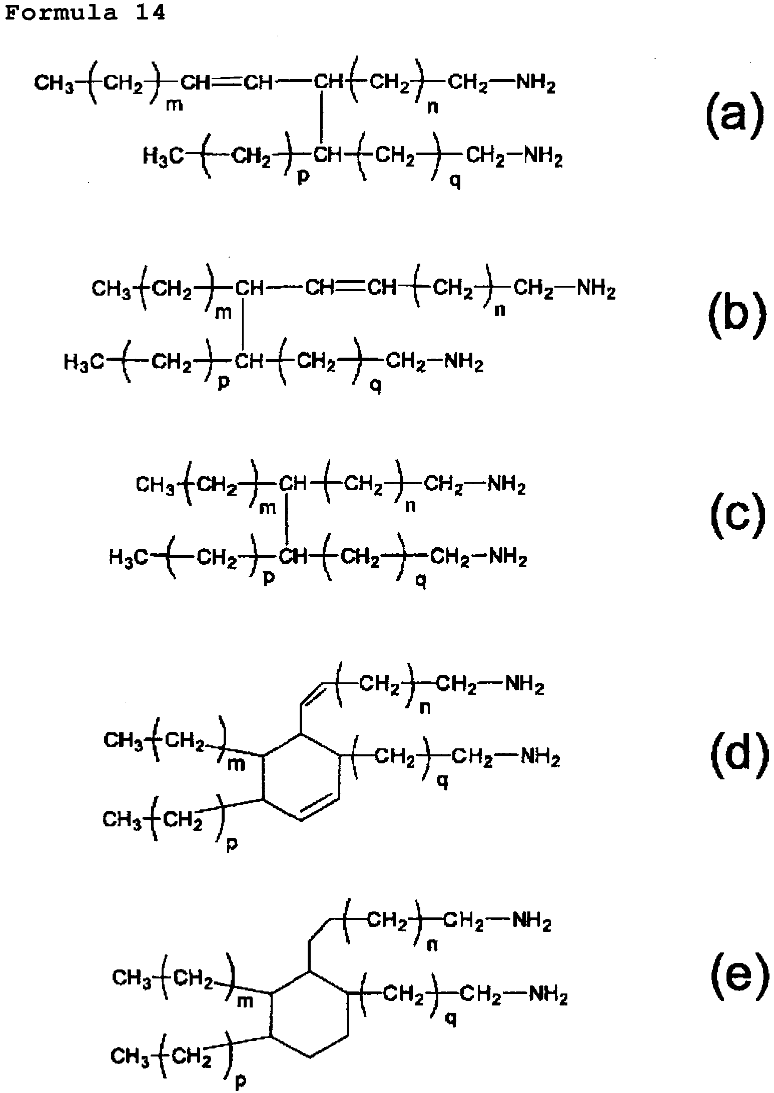

In formulas (a) to (e), m, n, p and q are each independently an integer from 0 to 15.

Specific examples of commercial items of dimer diamine include VERSAMINE 551 (trade name, made by Cognis Japan Ltd.) and PRIAMINE 1074 (trade name, made by Croda Japan K. K.). Dimer diamine (a1) also includes a compound formed by hydrogenating diamine obtained by a reductive amination reaction of dimer acid, and specific examples of commercial items include VERSAMINE 552 (trade name, made by Cognis Japan Ltd.).

Among types of the diamines, DDS, BAPP, HFBAPP, BAPEE, IPDA or PRIAMINE 1074 is preferred in view of solubility of the resultant ink in the solvent described below (solvent containing solvent (B) and solvent (C), and when necessary, solvent (D)).

The diamine may be used alone or in combination with two or more kinds.

### 1.1-3-3. Dicarboxylic anhydride

Specific examples of the dicarboxylic anhydride represented by the formula (9) include phthalic anhydride, trimellitic anhydride, 3-methylphthalic anhydride, 4-methylphthalic anhydride, 4-tert-butylphthalic anhydride, 3-fluorophthalic anhydride, 4-fluorophthalic anhydride, 4-ethynylphthalic anhydride, 4-phenylethynylphthalic anhydride, tetrafluorophthalic anhydride, succinic anhydride, butylsuccinic anhydride, n-octylsuccinic anhydride, dodecylsuccinic anhydride, tetrapropenylsuccinic anhydride, tetradecenylsuccinic anhydride, octadecenylsuccinic anhydride, allylsuccinic anhydride, 2-butene-1-yl-succinic anhydride, 2-dodecene-1-yl-succinic anhydride, maleic anhydride (abbreviation: MA), 2,3-dimethylmaleic anhydride, glutaric anhydride, itaconic anhydride, citraconic anhydride, allylnadic anhydride, cis-1,2-cyclohexanedicarboxylic anhydride, 4-methylcyclohexane-1,2-dicarboxylic anhydride, cis-4-cyclohexene-1,2-dicarboxylic anhydride, methylcyclohexene-1,2-dicarboxylic anhydride, 5-norbornene-2,3-dicarboxylic anhydride, 1,3-cyclohexanedicarboxylic anhydride, p-(trimethoxysilyl)phenylsuccinic anhydride, p-(triethoxysilyl)phenylsuccinic anhydride, m-(trimethoxysilyl)phenylsuccinic anhydride, m-(triethoxysilyl)phenylsuccinic anhydride, trimethoxysilylpropylsuccinic anhydride and triethoxysilylpropylsuccinic anhydride (abbreviation: TESA).

Among types of the dicarboxylic anhydride, the dicarboxylic anhydride preferably includes phthalic anhydride, trimellitic anhydride, 4-methylphthalic anhydride, 4-tert-butylphthalic anhydride, 4-fluorophthalic anhydride, tetrafluorophthalic anhydride, tetrapropenylsuccinic anhydride, tetradecenylsuccinic anhydride, octadecenylsuccinic anhydride, 2-dodecene-1-yl-succinic anhydride, glutaric anhydride, itaconic anhydride, citraconic anhydride, allylnadic anhydride, cis-1,2-cyclohexanedicarboxylic anhydride, 4-methylcyclohexane-1,2-dicarboxylic anhydride, cis-4-cyclohexene-1,2-dicarboxylic anhydride, 5-norbornene-2,3-dicarboxylic anhydride, MA, TESA and 1,3-cyclohexanedicarboxylic anhydride.

Among types of the dicarboxylic anhydride, MA or TESA is further preferred in view of solubility of the resultant ink in the solvent described below (solvent containing solvent (B) and solvent (C), and when necessary, solvent (D)).

The dicarboxylic anhydride may be used alone or in combination with two or more kinds.

### 1.1-3-4. Monoamine

Specific examples of the monoamine represented by the formula (10) include 3-aminopropyltrimethoxysilane, 3-aminopropyltriethoxysilane (abbreviation: APSE), 3-aminopropylmethyldimethoxysilane, 3-aminopropylmethyldiethoxysilane, 4-aminobutyltrimethoxysilane, 4-aminobutyltriethoxysilane, 4-aminobutylmethyldiethoxysilane, p-aminophenyltrimethoxysilane, p-aminophenyltriethoxysilane, p-aminophenylmethyldimethoxysilane, p-aminophenylmethyldiethoxysilane, m-aminophenyltrimethoxysilane, m-aminophenylmethyldiethoxysilane, 4-ethynylaniline, 3-ethynylaniline, propargylamine, 3-aminobutyne, 4-aminobutyne, 5-aminopentyne, 4-aminopentyne, allylamine, 7-aminoheptyne, m-aminostyrene, p-aminostyrene, m-amino-α-methylstyrene, 3-aminophenylacetylene and 4-aminophenylacetylene.

Among types of the monoamine, for example, in view of an excellent durability of the resultant polyimide film, 3-aminopropyltrimethoxysilane, 3-aminopropylmethyldiethoxysilane, APSE and p-aminophenyltrimethoxysilane are preferred, and APSE is particularly preferred.

The monoamine may be used alone or in combination with two or more kinds.

### 1.1-3-5. Method for synthesizing amide acid derivative (A1)

Specific examples of methods for preparing the amide acid derivative (A1) include the methods described in the Patent literature Nos. 6 to 10.

The amide acid derivative (A1) can be obtained by allowing diamine and/or monoamine to react with tetracarboxylic dianhydride and/or dicarboxylic anhydride under mild reaction conditions in which an amino group and an acid anhydride group react to form amide acid.

"Mild reaction conditions" means conditions in which the reaction is allowed, for example, under a normal pressure, a temperature in the range of 20 to 60°C, and a reaction time in the range of 0.2 to 20 hours, without using a catalyst and without activating a carboxyl group formed by opening a ring of the acid anhydride group by the reaction, for example. An expression "activating the carboxyl group" means conversion of the carboxyl group into acid chloride.

Under such mild reaction conditions, the carboxyl group formed by the reaction of the amino group with the acid anhydride group does not further react with an amino group of the diamine and/or the monoamine. Therefore, amide acid derivative (A1) having a free carboxyl group is obtained.

### 1.1-3-6. Method for synthesizing imidized substance (A2)

The imidized substance (A2) can be obtained by imidizing the amide acid derivative (A1). Specific examples include a method for imidizing the amide acid derivative according to a thermal method or a chemical method using a dehydration catalyst or a dehydrating agent. Preferred methods include the method for imidizing the amide acid derivative according to the thermal method in view of allowing a use as a component of the ink without carrying out purification treatment, and so forth. Further preferred methods include the method for imidizing the amide acid derivative by allowing raw materials such as the tetracarboxylic dianhydride and the diamine, or the dicarboxylic anhydride and the monoamine to react with each other in the reaction solvent, and then carrying out reflux. The reflux is preferably carried out under conditions of 1.5 to 10 hours at 140 to 230°C, although the conditions are different depending on the reaction solvent to be used. If a reflux temperature is within the range described above, imidization fully progresses. Therefore, the ink containing the resultant imidized substance can form a tough polyimide film.

### 1.1-3-7. Reaction solvent

The reaction solvent that can be used upon preparing the amide acid derivative (A1) or the imidized substance (A2) thereof is not particularly limited, but is preferably a solvent that can easily dissolve the amide acid derivative (A1), the imidized substance (A2), and raw material compounds to be used upon preparing the amide acid derivative (A1) and the imidized substance (A2).

Moreover, a solution obtained after preparing the amide acid derivative (A1) or the imidized substance (A2) is preferably used directly as the ink of the invention, or when necessary, used as the ink of the invention by further adding an additive described below to the solution. Therefore, as the reaction solvent, such a solvent is preferably used as the solution obtained after preparing the amide acid derivative (A1) or the imidized substance (A2) has a low toxicity and can easily form a polyimide film having an excellent storage stability and jettability and having a desired shape (hereinafter, referred to also as patternability).

As the reaction solvent, a solvent containing solvent (B) and/or solvent (C) below is preferably used in view of allowing obtaining of an ink having an excellent storage stability, jettability and patternability, and a low toxicity.

The reaction solvent may be used alone or in combination with two or more kinds.

If the reaction solvent is used in an amount of 100 parts by weight or more based on 100 parts by weight of the total of the raw material compounds to be used for preparing the amide acid derivative (A1) or the imidized substance (A2), the relevant synthetic reaction progresses smoothly, and therefore such a use is preferred.

### 1.1-4. Weight average molecular weight of amide acid derivative (A1) or imidized substance (A2)

As the amide acid derivative (A1) or the imidized substance (A2), in view of an excellent solubility in solvent (B) and solvent (C) below, and so forth, a compound having a weight average molecular weight in the range of 300 to 12,000 is preferably used. From a viewpoint of solubility in solvent (B) and solvent (C), the weight average molecular weight of the amide acid derivative (A1) and the imidized substance (A2) is further preferably in the range of 400 to 9,000, particularly preferably, in the range of 450 to 7,000.

If a compound having a weight average molecular weight in the range of 300 or more is used, a chemically and mechanically stable polyimide film is obtained. Moreover, a compound having a weight average molecular weight in the range of 12,000 or less has a particularly high solubility in solvent (B) and solvent (C), and therefore the concentration of component (A) in the ink of the invention can be increased. Thus, flexibility and heat resistance of the polyimide film obtained from the ink can be improved.

The weight average molecular weight of the amide acid derivative (A1) and the imidized substance (A2) can be measured according to a gel permeation chromatography (GPC) method.

For example, the amide acid derivative (A1) or the imidized substance (A2) is mixed with N,N-dimethylformamide (DMF) to prepare a solution having a concentration of about 1% by weight of the amide acid derivative (A1) or the imidized substance (A2). Then, the solution and as columns the columns prepared by combining G4000HXL, G3000HXL, G2500HXL and G2000HXL made by Tosoh Corporation in series in the order are used, and measurement is carried out by using DMF as a developer under conditions of a column temperature of 40°C and a flow rate of 1.0 mL/min according to the GPC method, and then calculating a polystyrene-equivalent weight average molecular weight, and thus the weight average molecular weight can be determined.

### 1.1-5. Content of component (A)

The content of component (A) in the ink of the invention is preferably in the range of 5 to 95% by weight, further preferably, in the range of 20 to 80% by weight, based on 100% by weight of the ink.

If the content of component (A) in the ink of the invention is in the range described above, an ink having an excellent jettability can be obtained.

The ink of the invention contains solvent (B) and solvent (C) in a specific amount. Therefore, the content of component (A) in the ink can be increased. Formation of a thick polyimide film is required depending on an application. Therefore, in the above case, a higher concentration is preferred because, as the concentration of component (A) in the ink of the invention is higher, the thickness of the polyimide film obtained from the ink becomes larger.

Moreover, even when the content of component (A) in the ink is increased, the ink of the invention can be jetted in an inkjet coater.

According to the ink of the invention, the content of component (A) in the ink can be easily changed depending on a desired application. Therefore, a thin polyimide film to a thick polyimide film can be easily formed by one-time jetting by means of the inkjet coater.

### 1.2. Solvent

The ink of the invention is an inkjet ink that contains specific solvent (B) and solvent (C) in a specific amount, and when necessary, may further contain solvent (D). When such a solvent is used, an ink having a good storage stability, jettability and patternability is composed, and an ink hardly causing degradation of an inkjet head, and having a low toxicity is obtained.

"Storage stability" in the invention means stability during storage before and after using the ink, and when using polyamide acid having poor stability at a normal temperature or having poor thermal stability, "storage stability "means stability during cold storage in the range of -20 to 0°C. "Storage stability" means absence of, under predetermined conditions, a change affecting jetting of the ink, such as a change of viscosity of the ink, precipitation of a polyamide acid or polyimide component, freezing or evaporation of the solvent.

### 1.2-1. Solvent (B)

The solvent (B) is dimethyl sulfoxide (abbreviation: DMSO).

The solvent (B) can easily dissolve component (A). Moreover, the solvent (B) has a lower toxicity and can be further preferably used as the solvent for the inkjet ink in comparison with a solvent that has been used so far for dissolving the amide acid derivative or the imidized substance thereof, such as 1-methyl-2-pyrrolidone, N,N-dimethylformamide, N,N-dimethylacetamide, N,N-diethylacetamide and N,N-dimethylpropionamide.

In a case where a compound prepared using maleic acid or a derivative thereof as a raw material is used as component (A), the compound is only poorly dissolved in the solvent that has been used so far, in many cases. Therefore, in the case where the compound is used as component (A), an advantage of using the solvent (B) is particularly significant.

The ink of the invention contains solvent (B) ordinarily in an amount in the range of 10 to 30% by weight, preferably, in the range of 10 to 25% by weight, further preferably, in the range of 10 to 20% by weight, based on 100% by weight of the total of solvent (B) and solvent (C). If the content of solvent (B) is in the range described above, an ink having a low toxicity and hardly causing degradation of the inkjet head, and so forth is obtained. Moreover, the solvent (B) can easily dissolve component (A), and therefore plugging of component (A) to the inkjet head, or precipitation of component (A) during storing the ink is not caused.

### 1.2-2. Solvent (C)

The solvent (C) is at least one kind of solvent selected from diethylene glycol ethylmethyl ether (abbreviation: EDM), triethylene glycol dimethyl ether (abbreviation: MTM) and γ-butyrolactone (abbreviation: GBL), and when the solvent (C) is mixed with the solvent (B), an ink having a good storage stability, jettability and patternability is composed.

The mixed solvent of the solvent (B) and the solvent (C) can easily dissolve component (A). Moreover, the solvent (C) has a lower toxicity and can be further preferably used as a solvent for an inkjet ink in comparison with the solvent such as 1-methyl-2-pyrrolidone, N,N-dimethylformamide, N,N-dimethylacetamide, N,N-diethylacetamide or N,N-dimethylpropionamide that has been used for dissolving the amide acid derivative or the imidized substance thereof so far.

The ink of the invention contains solvent (B) and solvent (C) preferably in a total amount in the range of 65 to 100% by weight, further preferably, in a total amount of 70 to 100% by weight, still further preferably, the range of 75 to 100% by weight, based on 100% by weight of the total of solvent (B), solvent (C), and solvent (D). If the total amount of solvent (B) and solvent (C) is in the range described above, an ink having good storage stability, jettability and patternability is composed, and an ink hardly causing degradation of the inkjet head, and so forth is obtained. Moreover, solvent (B) and solvent (C) can easily dissolve component (A), and therefore plugging of component (A) to the inkjet head, or precipitation of component (A) during storing the ink is not caused. Furthermore, even during cold storage in the range of -20 to 5°C, the ink is not frozen and incapability of using the ink is not caused.

### 1.2-3. Solvent (D)

The solvent (D) is a solvent other than the solvent (B) and the solvent (C), and is not particularly limited, if the solvent (D) is a compound that can dissolve the component (A) when the solvent (D) is mixed with solvent (B) and solvent (C),

The solvent (D) has a boiling point preferably in the range of 150 to 300°C, further preferably, in the range of 150 to 270°C.

Furthermore, the solvent (D) preferably has a low toxicity. In addition, in the invention, toxicity comprehensively means acute toxicity, mutagenicity, skin irritation, eye irritation, carcinogenicity or the like.

Specific examples of the solvent (D) include ethanol, ethylene glycol, propylene glycol, glycerol, ethylene glycol monomethyl ether, ethylene glycol monobutyl ether, ethylene glycol monophenyl ether, ethylene glycol dimethyl ether, ethylene glycol monomethyl ether acetate, ethylene glycol monoethyl ether acetate, diethylene glycol monomethyl ether, diethylene glycol monobutyl ether, diethylene glycol diethyl ether, diethylene glycol dibutyl ether, diethylene glycol isopropylmethyl ether, diethylene glycol butylmethyl ether, diethylene glycol monoethyl ether acetate, triethylene glycol monomethyl ether, triethylene glycol divinyl ether, propylene glycol monomethyl ether (1-methoxy-2-propanol), propylene glycol monoethyl ether (1-ethoxy-2-propanol), propylene glycol monobutyl ether (1-butoxy-2-propanol), propylene glycol dimethyl ether, propylene glycol monomethyl ether acetate, dipropylene glycol monomethyl ether, dipropylene glycol dimethyl ether, tripropyllene glycol monomethyl ether, tripropylene glycol dimethyl ether, α-acetyl-γ-butyrolactone, ε-caprolactone, γ-hexanolactone, δ-hexanolactone, methylethylsulfoxide and diethylsulfoxide.

The solvent (D) may be used alone or in combination with two or more kinds.

### 1.3. Additive

The ink of the invention may contain, depending on objective characteristics, an additive other than component (A), solvent (B), solvent (C), and solvent (D) compounded when necessary within the range in which advantageous effects of the invention are not adversely affected. Specific examples of such an additive include a macromolecular compound, an epoxy compound, an acrylic resin, a surfactant, an antistatic agent, a coupling agent, an epoxy curing agent, a pH adjuster, an anti-rust agent, a preservative, a fungicidal agent, an antioxidant, a reduction preventive, an evaporation accelerator, a chelating agent, a water-soluble polymer, a pigment, titanium black, carbon black and a dye. The additives may be appropriately used alone or in combination with two or more kinds depending on objective characteristics.

### 1.3-1. Macromolecular compound

The macromolecular compound is not particularly limited. Specific examples include polyamide acid (excluding amide acid derivative (A1)), soluble polyimide (excluding imidized substance (A2)), polyamide, polyamideimide, polyamide acid ester, polyester, an acrylic acid polymer, an acrylate polymer, polyvinyl alcohol, and polyoxyethylene. The macromolecular compound may be used alone or in combination with two or more kinds.

As the macromolecular compound, in view of an excellent solubility in the solvent (B) and/or the solvent (C), and so forth, a macromolecular compound having a weight average molecular weight in the range of 1,000 to 200,000 is preferably used. From a viewpoint of the solubility of the macromolecular compound in the solvent (B) and/or the solvent (C), the weight average molecular weight of the macromolecular compound is further preferably in the range of 1,000 to 180,000, still further preferably, in the range of 1,000 to 160,000, particularly preferably, in the range of 1,000 to 150,000.

If a macromolecular compound having a weight average molecular weight in the range of 1,000 or more is used, the macromolecular compound is not evaporated by heat treatment upon forming the polyimide film, and thus a chemically and mechanically stable polyimide film is obtained. Moreover, a macromolecular compound having a weight average molecular weight in the range of 200,000 or less has a particularly high solubility in the solvent (B) and/or the solvent (C), and therefore the concentration of the macromolecular compound in the ink of the invention can be increased. Therefore, flexibility and heat resistance of the polyimide film obtained from the ink can be improved.

The weight average molecular weight of the macromolecular compound can be measured according to the gel permeation chromatography (GPC) method. Measurement can be carried out, for example, by applying the method described in the section 1.1-4. Amide acid derivative (A1) or imidized substance (A2).

The concentration of the macromolecular compound in the ink of the invention is ordinarily in the range of 0 to 20% by weight, preferably, in the range of 0 to 10% by weight. If the macromolecular compound is within such a concentration range, a polyimide film having good characteristics as an insulating film tends to be obtained.

### 1.3-2. Epoxy compound

The epoxy compound is not particularly limited, if the epoxy compound is has an oxirane or oxetane. A compound having two or more oxiranes is preferred.

Specific examples of the epoxy compound include a bisphenol A epoxy compound, a glycidyl ester epoxy compound, an alicyclic epoxy compound, a polymer of a monomer having an oxirane, and a copolymer of the monomer having the oxirane with any other monomer.

Specific examples of the monomer having the oxirane include glycidyl (meth)acrylate, 3,4-epoxycyclohexyl (meth)acrylate and methylglycidyl (meth)acrylate.

Specific examples of any other monomer to be copolymerized with the monomer having the oxirane include (meth)acrylic acid, methyl (meth)acrylate, ethyl (meth)acrylate, isopropyl (meth)acrylate, n-butyl (meth)acrylate, iso-butyl (meth)acrylate, tert-butyl (meth)acrylate, cyclohexyl (meth)acrylate, benzyl (meth)acrylate, 2-hydroxyethyl (meth)acrylate, 2-hydroxypropyl (meth)acrylate, styrene, methylstyrene, chloromethylstyrene, (3-ethyl-3-oxetanyl)methyl (meth)acrylate, N-cyclohexylmaleimide and N-phenylmaleimide.

Preferred specific examples of the polymer of the monomer having the oxirane, and the copolymer of the monomer having the oxirane with any other monomer include polyglycidyl methacrylate, a methyl methacrylate-glycidyl methacrylate copolymer, a benzyl methacrylate-glycidyl methacrylate copolymer, a n-butyl methacrylate-glycidyl methacrylate copolymer, a 2-hydroxyethyl methacrylate-glycidyl methacrylate copolymer, a (3-ethyl-3-oxetanyl)methyl methacrylate-glycidyl methacrylate copolymer and a styrene-glycidyl methacrylate copolymer. If the ink of the invention contains the epoxy compounds, a polyimide film having an excellent heat resistance is obtained, and therefore a use of such epoxy compounds is preferred.

Specific examples of the epoxy compounds include "jER 807," "jER 815, " "jER 825, " "jER 827, " "jER 828," "jER 190P, " "jER 191P, " "jER 1004" and "jER 1256" (trade names) (Mitsubishi Chemical Corporation), "Araldite CY177" and "Araldite CY184" (trade names) (Huntsman Japan K. K.), "Celloxide 2021P," "Celloxide 3000" and "EHPE-3150" (trade names) (Daicel Chemical Industries, Ltd.), "Techmore VG3101L" (trade name) (Mitsui Chemicals, Inc.), N,N,N',N'-tetraglycidyl-m-xylenediamine, 1,3-bis(N,N-diglycidylaminomethyl)cyclohexane and N,N,N',N'-tetraglycidyl-4,4'-diaminodiphenylmethane. Among types of the epoxy compounds, if Araldite CY184, Celloxide 2021P, Techmore VG3101L or jER 828 is used, a polyimide film having a particularly good flatness is obtained, and therefore a use of such an epoxy compound is preferred.

Specific examples of the epoxy compounds further include compounds represented by formula (I) to formula (VI) below. Among types of the epoxy compounds, compounds represented by formulas (I), (V) and (VI) below are preferred because a polyimide film having a particularly good flatness is obtained.

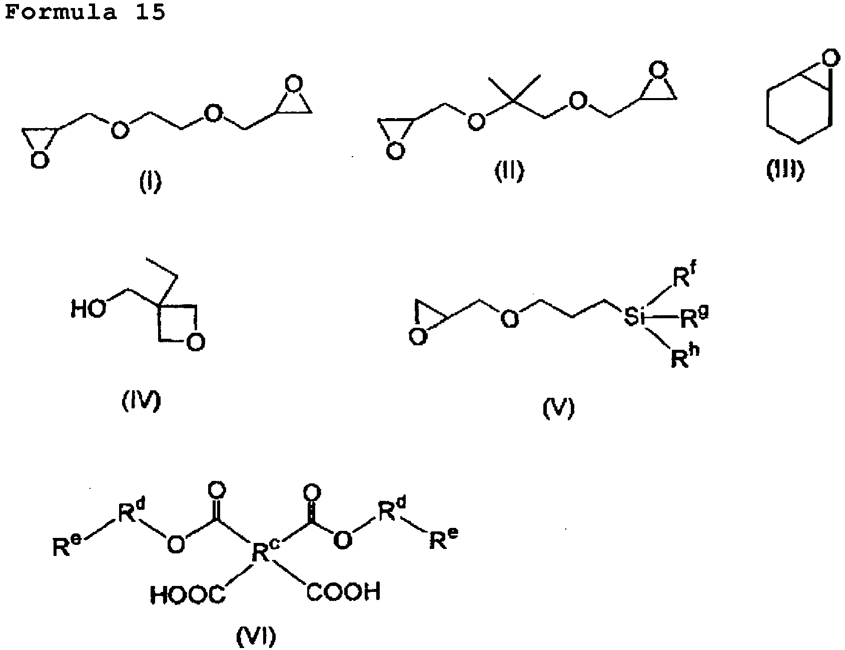

In the formula (V), R^{f}, R^{g} and R^{h} are each independently hydrogen or an organic group having 1 to 30 carbons. Specific examples of the organic group having 1 to 30 carbons include a hydrocarbon group having 1 to 30 carbons.

In the formula (VI), R^{c} is an organic group having 2 to 100 carbons. Specific examples of the organic group having 2 to 100 carbons include a hydrocarbon group having 2 to 100 carbons or a group including an aromatic group having 6 to 40 carbons.

In the formula (VI), R^{d} is independently an organic group having 1 to 30 carbons. Specific examples of the organic group having 1 to 30 carbons include a straight-chain or branched hydrocarbon group having 1 to 30 carbons, preferably, a hydrocarbon group having 1 to 30 carbons that may include a ring structure or oxygen. Specific examples of the ring structure include phenyl, cyclohexyl, naphthyl, cyclohexenyl and tricyclo[5.2.1.0^{2,6}]decanyl.

In the formula (VI), R^{e} is independently an organic group having an oxetane, oxirane or 1,2-epoxycyclohexane, preferably, an organic group selected from the group of formulas (VII) to (IX) below.

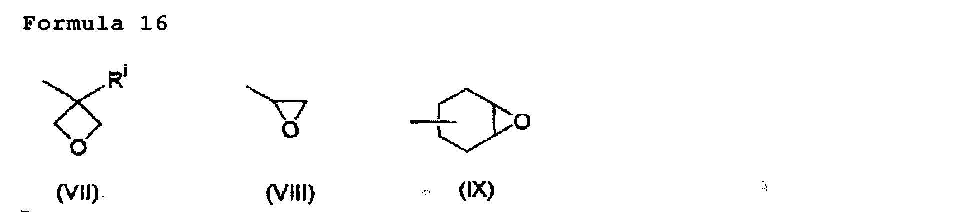

In the formula (VII), Rⁱ is hydrogen or alkyl having 1 to 3 carbons.

Preferred examples of the compounds represented by the formula (VI) include a compound represented by formula (X) below.

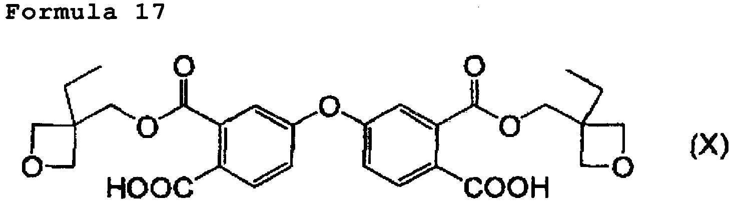

The epoxy compound may be used alone or in combination with two or more kinds.

When the epoxy compound is contained in the ink of the invention, the concentration of the epoxy compound in the ink is not particularly limited, but is preferably in the range of 0.1 to 20% by weight, further preferably, in the range of 1 to 10% by weight. If the concentration is within the range described above, heat resistance, chemical resistance and flatness of the resultant polyimide film become good.

### 1.3-3. Acrylic resin

The acrylic resin is not particularly limited, if the acrylic resin has an acryloyl group or a methacryloyl group. Specific examples include a homopolymer of a monomer such as polymerizable monofunctional (meth)acrylate having a hydroxyl group; polymerizable monofunctional (meth)acrylate having no hydroxyl group; difunctional (meth)acrylate; trifunctional or higher functional (meth)acrylate; monofunctional (meth)acrylate including an oxetane or epoxy (oxirane) within a molecule; multifunctional (meth)acrylate including an oxetane or epoxy (oxirane) within a molecule, and a copolymer prepared from the monomers. Moreover, such a monomer may be copolymerized as styrene, methylstyrene, chloromethylstyrene, vinyltoluene, N-acryloyl morpholine, N-cyclohexylmaleimid, N-phenylmaleimide, (meth)acrylamide, a polystyrene macromonomer, (meth)acrylic acid, crotonic acid, alpha-chloroacrylic acid, cinnamic acid, maleic acid, fumaric acid, itaconic acid, citraconic acid and mesaconic acid.

In addition, "(meth)acrylate" herein indicates both or either one of acrylate and methacrylate.

Moreover, a case where the number of polymerizable group is one is expressed as "monofunctional, " and a case where the number is two is expressed as "difunctional." "Trifunctional" or "multifunctional" is also expressed based on the number of polymerizable groups.

Specific examples of the polymerizable monofunctional (meth)acrylate having the hydroxyl group include 2-hydroxyethyl (meth)acrylate, 2-hydroxypropyl (meth)acrylate, 4-hydroxybutyl (meth)acrylate, glycerol mono(meth)acrylate and 1,4-cyclohexanedimethanol mono(meth)acrylate. Among types of the monomers, in view of allowing flexibility of the polyimide film to be formed, 4-hydroxy butylacrylate and 1,4-cyclohexane dimethanol monoacrylate are preferred.

Specific examples of the polymerizable (meth) acrylate having no hydroxyl group include methyl (meth)acrylate, ethyl (meth)acrylate, isopropyl (meth)acrylate, butyl (meth)acrylate, iso-butyl (meth)acrylate, tert-butyl (meth)acrylate, cyclohexyl (meth)acrylate, isobornyl (meth)acrylate, phenyl (meth)acrylate, benzyl (meth)acrylate, tricyclo[5.2.1.0^{2,6}]decanyl (meth)acrylate, dicyclopentenyloxyethyl (meth)acrylate, 5-tetrahydrofurfuryl oxycarbonylpentyl (meth)acrylate, (meth)acrylate of ethylene oxide adduct of lauryl alcohol, ω-carboxypolycaprolactone mono(meth)acrylate, 3-methyl-3-(meth)acryloxy methyloxetane, a polymethylmethacrylate macromonomer, mono[2-(meth)acryloyloxyethyl]succinate, mono[2-(meth)acryloyloxyethyl]maleate and mono[2-(meth)acryloyloxyethyl]cyclohexene-3,4-dicarboxylate.

Specific examples of the monofunctional (meth)acrylate including the oxetane or epoxy (oxirane) in the molecule or the multifunctional (meth)acrylate including the oxetane or epoxy (oxirane) within the molecule include glycidyl (meth)acrylate, methylglycidyl (meth)acrylate, 3,4-epoxycyclohexyl (meth)acrylate, (3-ethyl-3-oxetanyl)methyl (meth)acrylate, 3-ethyl-3-(meth)acryloxymethyl oxetane, 3-methyl-3-(meth)acryloxyethyl oxetane, 3-ethyl-3-(meth)acryloxyethyl oxetane, 2-phenyl-3-(meth)acryloxymethyl oxetane, 2-trifluoromethyl-3-(meth)acryloxymethyl oxetane, 4-trifluoromethyl-2-(meth)acryloxymethyl oxetane and p-vinylphenyl-3-ethyloxeta-3-yl methyl ether.

Specific examples of the difunctional (meth) acrylate include bisphenol-F ethylene oxide-modified di(meth)acrylate, bisphenol-A ethylene oxide-modified di(meth)acrylate, isocyanuric acid ethylene oxide-modified di(meth)acrylate, polyethylene glycol di(meth)acrylate, polypropylene glycol di(meth)acrylate, pentaerythyritol di(meth)acrylate, pentaerythritol di(meth)acrylate monostearate, dipentaerythritol di(meth)acrylate, 1,4-butanediol di(meth)acrylate, 1,6-hexanediol di(meth)acrylate, 1,9-nonanediol di(meth)acrylate, 1,4-cyclohexane dimethanol di(meth)acrylate, 2-n-butyl-2-ethyl-1,3-propandiol di(meth)acrylate and trimethylolpropane di(meth)acrylate.

Specific examples of the trifunctional or higher functional (meth)acrylate include trimethylolpropane tri(meth)acrylate, ethylene oxide-modified trimethylolpropane tri(meth)acrylate, propylene oxide-modified trimethylolpropane tri(meth)acrylate, epichlorohydrin-modified trimethylolpropane tri (meth) acrylate, ditrimethylolpropane tetra(meth)acrylate, glycerol tri(meth)acrylate, epichlorohydrin-modified glycerol tri(meth)acrylate, diglycerol tetra(meth)acrylate, pentaerythritol tri(meth)acrylate, pentaerythritol tetra(meth)acrylate, dipentaerythritol penta(meth)acrylate, alkyl-modified dipentaerythritol penta(meth)acrylate, alkyl-modified dipentaerythritol tetra(meth)acrylate, alkyl-modified dipentaerythritol tri(meth)acrylate, dipentaerythritol hexa(meth)acrylate, caprolactone-modified dipentaerythritol hexa(meth)acrylate, ethylene oxide-modified phosphoric acid tri(meth)acrylate, tris[(meth)acryloxyethyl]isocyanurate, caprolactone-modified tris[(meth)acryloxyethyl]isocyanurate and urethane (meth)acrylate.

The acrylic resin may be used alone or in combination with two or more kinds.

When the acrylic resin is contained in the ink of the invention, the concentration of the acrylic resin in the ink is not particularly limited, but is preferably in the range of 0.1 to 20% by weight, further preferably, in the range of 1 to 10% by weight. If the concentration is within the range described above, a polyimide film having an excellent heat resistance, chemical resistance and flatness is obtained.

### 1.3-4. Surfactant

The surfactant can be used in order to improve wettability, levelability or jettability of the ink of the invention relative to a coating object (support, for example).

In view of allowing improvement of jettability of the ink of the invention, specific examples of the surfactant include a silicone surfactant such as "BYK-300," "BYK-306," "BYK-335," "BYK-310," "BYK-341," "BYK-344" and "BYK-370" (trade names) (BYK-Chemie GmbH); an acrylic surfactant such as "BYK-358" and "BYK-361" (trade names) (BYK-Chemie GmbH); and a fluorochemical surfactant such as "DFX-18, " "Futargent 250" and "Futargent 251" (trade names) (Neos Co., Ltd.).

The surfactant may be used alone or in combination with two or more kinds.

When the surfactant is contained in the ink of the invention, the concentration of the surfactant in the ink is preferably in the range of 0.01 to 1% by weight.

### 1.3-5. Antistatic agent

The antistatic agent is used in order to prevent the ink of the invention from being charged. The antistatic agent is not particularly limited, and a publicly known antistatic agent can be used. Specific examples include a metal oxide such as tin oxide, tin oxide-antimony oxide composite oxide and tin oxide-indium oxide composite oxide, and a quaternary ammonium salt.

The antistatic agent may be used alone or in combination with two or more kinds.

When the antistatic agent is contained in the ink of the invention, the concentration of the antistatic agent in the ink is preferably in the range of 0.01 to 1% by weight.

### 1.3-6. Coupling agent

The coupling agent is not particularly limited, and a publicly known coupling agent can be used. A silane coupling agent is preferably used. Specific examples of the silane coupling agent include a trialkoxysilane compound and a dialkoxysilane compound.

Specific examples of the trialkoxysilane compound or the dialkoxysilane compound include γ-vinylpropyl trimethoxysilane, γ-vinylpropyl triethoxysilane, γ-acryloylpropylmethyl dimethoxysilane, γ-acryloylpropyl trimethoxysilane, γ-acryloylpropylmethyl diethoxysilane, γ-acryloylpropyl triethoxysilane, γ-methacryloylpropylmethyl dimethoxysilane, γ-methacryloylpropyl trimethoxysilane, γ-methacryloylpropylmethyl diethoxysilane, γ-methacryloylpropyl triethoxysilane, γ-glycidoxypropylmethyl dimethoxysilane, γ-glycidoxypropyl trimetoxysilane, γ-glycidoxypropylmethyl dietoxysilane, γ-glycidoxypropyl triethoxysilane, γ-aminopropylmethyl dimethoxysilane, γ-aminopropyl trimethoxysilane, γ-aminopropylmethyl diethoxysilane, γ-aminopropyl triethoxysilane, N-aminoethyl-γ-iminopropylmethyl dimethoxysilane, N-aminoethyl-γ-aminopropyl trimethoxysilane, N-aminoethyl-γ-aminopropyl triethoxysilane, N-phenyl-γ-aminopropyl trimethoxysilane, N-phenyl-γ-aminopropyl triethoxysilane, N-phenyl-γ-aminopropylmethyl dimethoxysilane, N-phenyl-γ-aminopropylmethyl diethoxysilane, γ-mercaptpropylmethyl dimethoxysilane, γ-mercaptopropylmethyl diethoxysilane, γ-mercaptopropyl trimethoxysilane, γ-mercaptopropyl triethoxysilane, γ-isocyanatepropylmethyl diethoxysilane and γ-isocyanatepropyl triethoxysilane.

Among types of the compounds, γ-vinylpropyl trimethoxysilane, γ-acryloylpropyl trimethoxysilane, γ-methacryloylpropyl trimethoxysilane and γ-isocyanatopropyl triethoxysilane are particularly preferred.

The coupling agent may be used alone or in combination with two or more kinds.

When the coupling agent is contained in the ink of the invention, the concentration of the coupling agent in the ink is preferably in the range of 0.01 to 3% by weight.

### 1.3-7. Epoxy curing agent

The epoxy curing agent is not particularly limited, and a publicly known epoxy curing agent can be used. Specifically, such a curing agent can be used as an organic acid dihydrazide compound, imidazole and a derivative thereof, dicyandiamides, aromatic amine, polycarboxylic acid and polycarboxylic anhydride.

In addition, the polycarboxylic acid means a compound having two or more carboxyl groups in one molecule.

Further specific examples of the epoxy curing agent include dicyandiamides such as dicyandiamide; an organic acid dihydrazide compound such as adipic acid dihydrazide and 1,3-bis(hydrazinocarboethyl)-5-isopropylhydantoin; an imidazole derivative such as 2,4-diamino-6-[2'-ethylimidazolyl-(1')]-ethyltriazine, 2-phenylimidazole, 2-phenyl-4-methylimidazole and 2-phenyl-4-methyl-5-hydroxymethylimidazole; polycarboxylic anhydride such as phthalic anhydride, trimellitic anhydride and 1,2,4-cyclohexanetricarboxylic acid-1,2-anhydride; and polycarboxylic acid such as trimellitic acid. Preferred examples include trimellitic acid and 1,2,4-cyclohexanetricarboxylic acid-1,2-anhydride.

The epoxy curing agent may be used alone or in combination with two or more kinds.

When the epoxy curing agent is contained in the ink of the invention, the concentration of the epoxy curing agent in the ink is preferably in the range of 0.2 to 5% by weight.

### 1.4. Viscosity of ink

The viscosity of the ink of the invention at a temperature (jetting temperature) when the ink is jetted from the inkjet coater is preferably in the range of 1 to 50 mPa·s, further preferably, in the range of 5 to 20 mPa·s, still further preferably, in the range of 8 to 15 mPa·s. If the viscosity is within the range described above, an ink having an excellent jetting accuracy is obtained. When the viscosity is lower than 50 mPa·s, a poor jetting hardly occurs.

Moreover, the viscosity of the ink after storage, for example, for 7 days at a predetermined temperature is also preferably within the range described above. A change of the viscosity between an ink at preparation and an ink after being allowed to stand for 7 days is preferably within the range of 15% or less. If the change exceeds 15%, a change of jetting conditions is needed in many cases, and jetting may become quite difficult.

The viscosity of the ink can be adjusted by appropriately selecting types of solvents and usage thereof depending on component (A) to be used.

Moreover, the ink is jetted at a normal temperature (25°C) in many cases. Therefore, the viscosity (at 25°C) of the ink of the invention is also preferably in the range similar to the preferred range at the jetting temperature.

### 1.5. Surface tension of ink

The surface tension of the ink of the invention is preferably in the range of 20 to 70 mN/m, further preferably, in the range of 20 to 45 mN/m. If the surface tension is within the range described above, a liquid droplet having a desired size and shape can be easily formed upon jetting the ink, and an ink having a good jettability is obtained, and therefore such a range is preferred.

The surface tension of the ink can be adjusted by appropriately selecting the types of solvents and usage thereof depending on component (A) to be used, or by using the surfactant when necessary.

### 2. Polyimide film

The polyimide film of the invention is formed of the ink of the invention.

The polyimide film has an excellent heat resistance and electric insulation, and thus can improve reliability and a yield of an electronic component.

### 2.1. Method for forming a polyimide film (manufacturing method)

The polyimide film can be preferably formed wholly on a support surface according to a method including a step for coating the ink of the invention on the support to form a coat according to an inkjet method (hereinafter, referred to also as "coat formation step") and a step for curing the coat (hereinafter, referred to also as "curing step"). A predetermined patterned (lined, for example) polyimide film can also be formed in a similar manner. If the ink of the invention is jetted in a patterned form, a patterned polyimide film can be formed. Unless otherwise noted herein, the polyimide film should include the patterned polyimide film.

### 2.1-1. Coat formation step

The coat formation step can be applied according to the inkjet method by means of the inkjet coater.

Specific examples of a jetting method according the inkjet method include piezoelectric, bubble jet (registered trade name), continuous flow and electrostatic induction jetting methods, preferably, the piezoelectric jetting method.

The ink of the invention can be jetted according to various methods by suitably selecting each component contained, and can be coated in a predetermined patterned form.

The inkjet coater is not limited to an inkjet coater having a constitution in which the inkjet head and an ink storage part are separate but may also have a constitution in which the inkjet head and the ink storage part are undetachably integrated. Moreover, the ink storage part may be detachably or undetachably integrated to the inkjet head and mounted to a carriage, or provided on a fixed member of the coater. In the latter case, the ink storage part may have a form for supplying the ink to a coating head through an ink supply member, for example, a tube.

Moreover, when a constitution for allowing a preferred negative pressure to act onto the inkjet head is provided for an ink tank, the inkjet coater can adopt a form prepared by arranging an absorber for the ink storage part of the ink tank, or a form having a flexible ink storage bag and a spring part for allowing force in a direction for expanding an internal volume to act to the bag, or the like.

The coater may be a serial printer, or a line printer composed by aligning coating elements over the range corresponding to an overall width of a coating medium.

The jetting temperature upon jetting the ink of the invention may be appropriately adjusted depending on the viscosity of the ink to be used, and is preferably in the range of 10 to 50°C, further preferably, in the range of 15 to 40°C.

Specific examples of the support include a glass epoxy support, a glass composite support, a paper phenol support, a paper epoxy support, a green epoxy support, and a BT resin support in conformity with various standards of printed circuit boards, such as FR-1, FR-3, FR-4, CEM-3 or E668.

Furthermore, the specific examples include a support including a metal such as copper, copper-zinc alloy, phosphor bronze, copper-beryllium alloy, aluminum, gold, silver, nickel, tin, chromium or stainless steel (a support may have a layer including the metals on a surface); a support including an inorganic substance such as aluminum oxide (alumina), aluminum nitride, zirconium oxide (zirconia), silicate of zirconium (zircon), magnesium oxide (magnesia), aluminum titanate, barium titanate, lead titanate (PT), lead zirconate titanate (PZT), lead lanthanum zirconium titanate (PLZT), lithium niobate, lithium tantalate, cadmium sulfide, molybdenum sulfide, beryllium oxide (beryllia), silicon oxide (silica), silicon carbide, silicon nitride, boron nitride, zinc oxide, mullite, ferrite, steatite, forsterite, spinel or spodumene (a support may have a layer including the inorganic substances on the surface); a support including a resin such as polyethylene terephthalate (PET) resin, polybutylene terephthalate (PBT) resin, polycyclohexylene

dimethylene terephthalate (PCT) resin, polyphenylene sulfide (PPS) resin, polycarbonate resin, polyacetal resin, polyphenylene ether resin, polyimide resin, polyamide resin, polyarylate resin, polysulfone resin, polyether sulfone resin, polyether imide resin, polyamide imide resin, epoxy resin, acrylic resin, Teflon (registered trade name), thermoplastic elastomer or liquid crystal polymer (a support may have a layer including the resins on the surface); a semiconductor support (silicon wafer) including silicon, germanium or gallium arsenide; a glass support; a support prepared by forming an electrode material (wiring) such as tin oxide, zinc oxide, indium tin oxide (ITO) or antimony tin oxide (ATO) on the surface; and a gel sheet such as αGEL, βGEL, θGEL or γGEL (registered trade names of Taica Corporation, for all types of GEL).

The polyimide film is preferably formed on the support including the polyimide resin described above, particularly, a film-shaped support including the polyimide resin, and on the silicon wafer.

The coat formation step preferably includes a step for coating the ink of the invention on the support according to the inkjet method, and then heating an ink-coated support using a hot plate, an oven or the like, and thus removing the solvent in the ink by vaporizing the solvent, and then drying the coat. The heating conditions are different depending on types and ratios of each component contained in the ink. The conditions are ordinarily at a temperature in the range of 70 to 150°C, for 5 to 15 minutes when using the oven, or 1 to 5 minutes when using the hot plate.

The thickness of the coat obtained may be appropriately adjusted depending on a desired application, and is preferably in the range of 1 to 20 micrometers, further preferably, in the range of 1 to 10 micrometers.

### 2.1-2. Curing step

In the curing step, the coat obtained in the coat formation step is cured.

The curing step may be applied by applying heat treatment to the coat. When the component (A) consists essentially of imidized substance (A2), the curing step may be applied by irradiating the coat with ultraviolet light, ion beams, electron beams or gamma-rays without limiting to the heat treatment.

In order to obtain a polyimide film having an excellent heat resistance, chemical resistance and flatness and also a sufficient mechanical strength, the heat treatment is preferably applied at a temperature in the range of 150 to 350°C, further preferably, in the range of 200 to 300°C, for 30 to 90 minutes when using the oven, or 5 to 30 minutes when using the hot plate.

The thickness of the thus obtained coat may be appropriately adjusted depending on a desired application, and is ordinarily in the range of 2 micrometers or more, preferably, in the range of 2 to 5 micrometers. The ink of the invention can contain component (A) at a high concentration. Therefore, a polyimide film having a thickness higher than the thickness of the film obtained from the ink that has been used so far can be easily formed.

Thus, according to the ink of the invention, a thick polyimide film can be obtained by single jetting. Therefore, for example, when a polyimide film having a thickness of about 10 micrometers is formed, the number of times of repeat coating can be reduced, as compared with the inkjet ink that has been used so far, and a step for manufacturing the polyimide film can be shortened.

### 3. Substrate for an electronic material

A substrate for an electronic material according to the invention has the polyimide film described above. Specific examples of the substrate for the electronic material according to the invention include a film substrate and a semiconductor wafer substrate.

Specific examples of the film substrate include a substrate obtained by forming a coat by coating the ink of the invention, according to the inkjet method, wholly or in a predetermined patterned form (lined form, for example), on a film-shaped support including a film such as a polyimide film on which wiring is preformed according to the inkjet method or the like, and then heating and drying the coat.

### 4. Electronic component

An electronic component of the invention has the substrate described above.

### Examples

Hereinafter, the invention will be explained by way of Examples and Comparative Examples, but the invention is in no way limited to the Examples.

Names of a reaction raw material and a solvent to be used in Examples and Comparative Examples are expressed using abbreviations. The abbreviations are used for descriptions below.

### Tetracarboxylic anhydride

### BSAA:

### 4,4'-[(isopropylidene)bis(p-phenyleneoxy)]diphthalic dianhydride

6FDA: 2,2-[bis(3,4-dicarboxyphenyl)]hexafluoropropane dianhydride
BPDA-H: 3,3',4,4'-bicyclohexyl tetracarboxylic dianhydride **Diamine**
BAPP: 2,2-bis[4-(4-aminophenoxy)phenyl]propane
HFBAPP: 2,2-bis[4-(4-aminophenoxy)phenyl]hexafluoropropane
DDS: 3,3'-diaminodiphenyl sulfone
IPDA: isophorone diamine
P-1074: PRIAMINE 1074 (trade name, made by Croda Japan K. K.)
BAPEE: diethylene glycol bis(3-aminopropyl)ether

### Dicarboxylic anhydride

MA: maleic anhydride
TESA: triethoxysilylpropyl succinic anhydride

### Monoamine

APSE: 3-aminopropyltriethoxysilane

### Solvent

DMSO: dimethyl sulfoxide
EDM: diethylene glycol ethylmethyl ether
MTM: triethylene glycol dimethyl ether
GBL: γ-butyrolactone
BC: butyl cellosolve (ethylene glycol monobutyl ether)

Evaluation methods applied in Examples and Comparative Examples are described below.

### Evaluation method

### (1) Weight average molecular weight (Mw)

Weight average molecular weight was measured by a gel permeation chromatography (GPC) method. An ink obtained was mixed with N,N-dimethylformamide (DMF) to prepare a solution having a concentration of about 1% by weight of polyamide acid. Then, the solution and as columns the columns prepared by combining G4000HXL, G3000HXL, G2500HXL and G2000HXL made by Tosoh Corporation in series in the order were used, and measurement was carried out by using DMF as a developer under conditions of a column temperature of 40°C and a flow rate of 1.0 mL/min according to the GPC method, and then calculating a polystyrene-equivalent weight average molecular weight, and thus the weight average molecular weight can be determined.

### (2) Viscosity (mPa·s)

Viscosity of an ink was measured at 25°C using a cone-plate type (E-type) viscometer (VISCONIC EHD, made by TOKYO KEIKI Inc.).

### (3) Surface tension (mN/m)

Surface tension of an ink was measured by using DM500 (made by Kyowa Interface Science Co., Ltd.). A constant temperature bath set at 25°C was prepared, and the surface tension of the ink was measured by a pendant drop method in an atmosphere at 25°C. Measurement was carried out at least five times, and a mean value was calculated as the surface tension.

### (4) Cold storage stability

Cold storage stability of an ink was evaluated. An ink was put into a freezer at -20°C, and a state after elapse of 7 days was observed. An ink being stable even under cold storage and without confirmation of freezing of a solvent and formation of an insoluble matter was rated to be good.

### (5) State of precipitation of a component

A state of an ink was visually observed. An ink without causing precipitation of an impurity or the like was rated to be good.

### Example 1

Into a 100 mL reaction vessel, a stirrer was put, and raw materials were charged as described below, and then agitation was carried out at room temperature for 4 hours, and then a light yellow solution containing 25% by weight of polyamide acid (hereinafter, referred to also as "ink A-1") was obtained.
BPDA-H: 0.8243 g
BAPP: 3.3140 g
BAPEE: 1.7785 g
MA: 1.5832 g
DMSO: 6.750 g
EDM: 15.750 g

Weight average molecular weight (Mw) of polyamide acid obtained was 3, 727, viscosity thereof was 8.20 mPa·s, and surface tension thereof was 29.3 mN/m. With regard to stability during cold storage, a solvent was not frozen and an insoluble matter was not formed, and thus the ink was stable, and rated to be good. Moreover, an impurity or the like was not precipitated, and a state of precipitation of a component of the ink was rated to be good.

### Example 2

Into a 100 mL reaction vessel, a stirrer was put, and raw materials were charged as described below, and then agitation was carried out at room temperature for 4 hours, and then a light yellow solution containing 22% by weight of polyamide acid (hereinafter, referred to also as "ink B-1") was obtained.
BSAA: 2.5294 g
HFBAPP: 1.3437 g
P-1074: 2.0916 g
MA: 0.6354 g
DMSO: 5.850 g
EDM: 17.550 g

Weight average molecular weight (Mw) of polyamide acid obtained was 5,182, viscosity thereof was 12. 69 mPa·s, and surface tension thereof was 28.5 mN/m.

With regard to stability during cold storage, a solvent was not frozen and an insoluble matter was not formed, and thus the ink was stable, and rated to be good. Moreover, an impurity or the like was not precipitated, and a state of precipitation of a component of the ink was rated to be good.

### Examples 3 to 6

Inks were obtained under conditions similar to the conditions in Example 1 except that raw materials shown in Table 1 were used. Results of evaluation of each ink (A-2 to A-5) are shown in Table 2.

### Examples 7 to 9

Inks were obtained under conditions similar to the conditions in Example 2 except that raw materials shown in Table 1 were used. Results of evaluation of each ink (B-2 to B-4) are shown in Table 2.

### Example 10

Into a 100 mL reaction vessel, a stirrer was put, and raw materials were charged as described below, and then agitation was carried out at room temperature for 4 hours, and then a light yellow solution containing 25% by weight of polyamide acid (hereinafter, referred to also as "ink C-1") was obtained.
6FDA: 0.9220 g
IPDA: 0.7776 g
P-1074: 2.0098 g
TESA: 3.7906 g
DMSO: 6.750 g
EDM: 15.750 g

Viscosity of polyamide acid obtained was 7.65 mPa·s, and surface tension thereof was 29.0 mN/m.

With regard to stability during cold storage, a solvent was not frozen and an insoluble matter was not formed, and thus the ink was stable, and rated to be good. Moreover, an impurity or the like was not precipitated, and a state of precipitation of a component of the ink was rated to be good.

### Examples 11 to 14

Inks were obtained under conditions similar to the conditions in Example 10 except that raw materials shown in Table 1 were used. Results of evaluation of each ink (C-2 to C-5) are shown in Table 2.

### Example 15

Into a 100 mL reaction vessel, a stirrer was put, and raw materials were charged as described below, and then agitation was carried out at room temperature for 4 hours, and then a light yellow solution containing 25% by weight of polyamide acid (hereinafter, referred to also as "ink D-1") was obtained.
6FDA: 3.8704 g
DDS: 0.4327 g
P-1074: 0.6250 g
APSE: 2.5719 g
DMSO: 6.750 g
EDM: 15.750 g

Weight average molecular weight (Mw) of polyamide acid obtained was 4, 895, viscosity thereof was 9.41 mPa·s, and surface tension thereof was 27.8 mN/m.

With regard to stability during cold storage, a solvent was not frozen and an insoluble matter was not formed, and thus the ink was stable, and rated to be good. Moreover, an impurity or the like was not precipitated, and a state of precipitation of a component of the ink was rated to be good.

### Examples 16 to 19

Inks were obtained under conditions similar to the conditions in Example 15 except that raw materials shown in Table 1 were used. Results of evaluation of each ink (D-2 to D-5) are shown in Table 2.

### Comparative Examples 1 to 5

Inks were obtained under conditions similar to the conditions in Example 1 except that raw materials shown in Table 1 were used. Results of evaluation of each ink (A' -1 to A' -5) are shown in Table 2. In addition, according to inks A'-2 and A'-5, agitation was carried out at room temperature for 16 hours after charging the raw materials, but an insoluble matter was formed, and a homogeneous solution was not obtained.

### Comparative Examples 6 to 9

Inks were obtained under conditions similar to the conditions in Example 2 except that raw materials shown in Table 1 were used. Results of evaluation of each ink (B'-1 to B'-4) are shown in Table 2. In addition, according to inks B'-3 and B'-4, agitation was carried out at room temperature for 16 hours after charging the raw materials, but an insoluble matter was formed, and a homogeneous solution was not obtained.

**Table 1**

**Table 1**

| | | Components | | | | | | | Concentration | | |
|---|---|---|---|---|---|---|---|---|---|---|---|
| Example | Ink | Component (A) | | | | Solvent (B) | Solvent (C) | Solvent (D) | (A)¹⁾ Concentra tion | (B)²⁾ Concentration | (B)+C)³⁾ Concentration |
| Example 1 | A-1 | BPDA-H 0.8243g | BAPP 3.3140g | BAPEE 1.7785g | MA 1.5832g | DMSO 6.750g | EDM 15.750g | - | 25 | 30 | 100 |
| Example 2 | B-1 | BSAA 2.5294g | HFBAPP 1.3437g | P-1074 2.0916g | MA 0.6354g | DMSO 5.850g | EDM 17.550g | - | 22 | 25 | 100 |
| Example 3 | A-2 | BPDA-H 0.8243g | BAPP 3.3140g | BAPEE 1.7785g | MA 1.5832g | DMSO 5.625g | EDM 16.875g | - | 25 | 25 | 100 |
| Example 4 | A-3 | BPDA-H 0.8243g | BAPP 3.3140g | BAPEE 1.7785g | MA 1.5832g | DMSO 4.500g | EDM 18.000g | - | 25 | 20 | 100 |
| Example 5 | A-4 | BPDA-H 0.8243g | BAPP 3.3140g | BAPEE 1.7785g | MA 1.5832g | DMSO 3.375g | EDM 19.125g | - | 25 | 15 | 100 |
| Example 6 | A-5 | BPDA-H 0.8243g | BAPP 3.3140g | BAPEE 1.7785g | MA 1.5832g | DMSO 2.250g | EDM 20.250g | - | 25 | 10 | 100 |
| Example 7 | B-2 | BSAA 2.5294g | HFBAPP 1.3437g | P-1074 2.0916g | MA 0.6354g | DMSO 4.680g | EDM 18.720g | - | 22 | 20 | 100 |
| Example 8 | B-3 | BSAA 2.5294g | HFBAPP 1.3437g | P-1074 2.0916g | MA 0.6354g | DMSO 3.51 Og | EDM 19.890g | - | 22 | 15 | 100 |
| Example 9 | B-4 | BSAA 2.5294g | HFBAPP 1.3437g | P-1074 2.0916g | MA 0.6354g | DMSO 2.340g | EDM 21.060g | - | 22 | 10 | 100 |
| Example 10 | C-1 | 6FDA 0.9220g | IPDA 0.7776g | P-1074 2.0098g | TESA 3.7906g | DMSO 6.750g | EDM 15.750g | - | 25 | 30 | 100 |
| Example 11 | C-2 | 6FDA 0.9220g | IPDA 0.7776g | P-1074 2.0098g | TESA 3.7906g | DMSO 5.625g | EDM 16.875g | - | 25 | 25 | 100 |
| Example 12 | C-3 | 6FDA 0.9220g | IPDA 0.7776g | P-1074 2.0098g | TESA 3.7906g | DMSO 4.500g | EDM 18.000g | - | 25 | 20 | 100 |
| Example 13 | C-4 | 6FDA 0.9220g | IPDA 0.7776g | P-1074 2.0098g | TESA 3.7906g | DMSO 3.375g | EDM 19.125g | - | 25 | 15 | 100 |

**Table 1-2**

| | | | | | | | | | | | |
|---|---|---|---|---|---|---|---|---|---|---|---|
| Example 14 | C-5 | 6FDA 0.9220g | IPDA 0.7776g | P-1074 2.0098g | TESA 3.7906g | DMSO 2.250g | EDM 20.250g | - | 25 | 10 | 100 |
| Example 15 | D-1 | 6FDA 3.8704g | DDS 0.4327g | P-1074 0.6250g | APSE 2.5719g | DMSO 6.750g | EDM 15.750g | - | 25 | 30 | 100 |
| Example 16 | D-2 | 6FDA 3.8704g | DDS 0.4327g | P-1074 0.6250g | APSE 2.5719g | DMSO 5.625g | EDM 16.875g | - | 25 | 25 | 100 |
| Example 17 | D-3 | 6FDA 3.8704g | DDS 0.4327g | P-1074 0.6250g | APSE 2.5719g | DMSO 4.500g | EDM 18.000g | - | 25 | 20 | 100 |
| Example 18 | D-4 | 6FDA 3.8704g | DDS 0.4327g | P-1074 0.6250g | APSE 2.5719g | DMSO 3.375g | EDM 19.125g | - | 25 | 15 | 100 |
| Example 19 | D-5 | 6FDA 3.8704g | DDS 0.4327g | P-1074 0.6250g | APSE 2.5719g | DMSO 2.250g | EDM 20.250g | - | 25 | 10 | 100 |

**Table 1-3**

| | | | | | | | | | | | |
|---|---|---|---|---|---|---|---|---|---|---|---|
| Comparative Example 1 | A'-1 | BPDA-H 0.8243g | BAPP 3.3140g | BAPEE 1.7785g | MA 1.5832g | DMSO 7.875g | EDM 14.625g | - | 25 | 35 | 100 |
| Comparative Example 2 | A'-2 | BPDA-H 0.8243g | BAPP 3.3140g | BAPEE 1.7785g | MA 1.5832g | DMSO 1.125g | EDM 21.375g | - | 25 | 5 | 100 |
| Comparative Example 3 | A'-3 | BPDA-H 0.8243g | BAPP 3.3140g | BAPEE 1.7785g | MA 1.5832g | DMSO 9.000g | EDM 13.500g | - | 25 | 40 | 100 |
| Comparative Example 4 | A'-4 | BPDA-H 0.8243g | BAPP 3.3140g | BAPEE 1.7785g | MA 1.5832g | DMSO 11.250g | EDM 11.250g | - | 25 | 50 | 100 |
| Comparative Example 5 | A'-5 | BPDA-H 0.8243g | BAPP 3.3140g | BAPEE 1.7785g | MA 1.5832g | - | EDM 22.500g | - | 25 | 0 | 100 |
| Comparative Example 6 | B'-1 | BSAA 2.5294g | HFBAPP 1.3437g | P-1074 2.0916g | MA 0.6354g | DMSO 8.190g | EDM 15.21 Og | - | 22 | 35 | 100 |
| Comparative Example 7 | B'-2 | BSAA 2.5294g | HFBAPP 1.3437g | P-1074 2.0916g | MA 0.6354g | DMSO 11.700g | EDM 11.700g | - | 22 | 50 | 100 |
| Comparative Example 8 | B'-3 | BSAA 2.5294g | HFBAPP 1.3437g | P-1074 2.0916g | MA 0.6354g | DMSO 1.170g | EDM 22.230g | - | 22 | 5 | 100 |
| Comparative Example 9 | B'-4 | BSAA 2.5294g | HFBAPP 1.3437g | P-1074 2.0916g | MA 0.6354g | - | EDM 23.400g | - | 22 | 0 | 100 |

| | | | | | | | | | | | |
|---|---|---|---|---|---|---|---|---|---|---|---|
| 1) Weight percent of component (A) based on 100% by weight of an inkjet ink. 2) Weight percent of solvent (B) based on 100% by weight of a total of solvent (B) and solvent (C). 3) Weight percent of a total of solvent (B) and solvent (C) based on 100% by weight of a total of solvent (B), solvent (C) and solvent (D). | | | | | | | | | | | |

**Table 2**

**Table 2**

| Ink | Concentration | | | Weight average molecular weight | Viscosity (mPa·s) | Surface tension (mN/m) | Cold storage stability | Precipitation of component |
|---|---|---|---|---|---|---|---|---|
| | (A)¹⁾ Concentration | (B)²⁾ ConCentration | (B)+(C)³⁾ Concentration | | | | | |
| A'-4 | 25 | 50 | 100 | - | 9.94 | - | Frozen | Good |
| A'-3 | 25 | 40 | 100 | - | 9.31 | - | Frozen | Good |
| A'-1 | 25 | 35 | 100 | - | 9.08 | - | Frozen | Good |
| A-1 | 25 | 30 | 100 | 3,727 | 8.20 | 29.3 | Good | Good |
| A-2 | 25 | 25 | 100 | - | 8.02 | - | Good | Good |
| A-3 | 25 | 20 | 100 | 4,720 | 7.98 | 28.0 | Good | Good |
| A-4 | 25 | 15 | 100 | - | 7.94 | - | Good | Good |
| A-5 | 25 | 10 | 100 | 6,203 | 8.38 | 27.2 | Good | Good |
| A'-2 | 25 | 5 | 100 | - | - | - | - | Formation of insoluble matter |
| A'-5 | 25 | 0 | 100 | - | - | - | - | Formation of insoluble matter |

**Table 2-2**

| | | | | | | | | |
|---|---|---|---|---|---|---|---|---|
| B'-2 | 22 | 50 | 100 | - | 16.30 | - | Frozen | Good |
| B'-1 | 22 | 35 | 100 | - | 14.43 | - | Frozen | Good |
| B-1 | 22 | 25 | 100 | 5,182 | 12.69 | 28.5 | Good | Good |
| B-2 | 22 | 20 | 100 | 5,414 | 12.75 | 28.3 | Good | Good |
| B-3 | 22 | 15 | 100 | - | 12.72 | - | Good | Good |
| B-4 | 22 | 10 | 100 | 5,655 | 12.48 | 27.6 | Good | Good |
| B'-3 | 22 | 5 | 100 | - | - | - | - | Formation of insoluble matter |
| B'-4 | 22 | 0 | 100 | - | - | - | - | Formation of insoluble matter |
| C-1 | 25 | 30 | 100 | - | 7.65 | 29.0 | Good | Good |
| C-2 | 25 | 25 | 100 | 2,450 | 7.56 | - | Good | Good |
| C-3 | 25 | 20 | 100 | - | 7.41 | 28.5 | Good | Good |
| C-4 | 25 | 15 | 100 | 2,394 | 7.11 | - | Good | Good |
| C-5 | 25 | 10 | 100 | - | 7.20 | 27.4 | Good | Good |

**Table 2-3**

| | | | | | | | | |
|---|---|---|---|---|---|---|---|---|
| D-1 | 25 | 30 | 100 | 4,895 | 9.41 | 27.8 | Good | Good |
| D-2 | 25 | 25 | 100 | - | 9.82 | - | Good | Good |
| D-3 | 25 | 20 | 100 | 4,891 | 8.95 | 27.4 | Good | Good |
| D-4 | 25 | 15 | 100 | - | 9.09 | - | Good | Good |
| D-5 | 25 | 10 | 100 | 5,174 | 8.97 | 26.9 | Good | Good |

| | | | | | | | | |
|---|---|---|---|---|---|---|---|---|
| 1) Weight percent of component (A) based on 100% by weight of an inkjet ink. 2) Weight percent of solvent (B) based on 100% by weight of a total of solvent (B) and solvent (C). 3) Weight percent of a total of solvent (B) and solvent (C) based on 100% by weight of a total of solvent (B), solvent (C) and solvent (D). | | | | | | | | |

### Example 20

Into a 100 mL reaction vessel, a stirrer was put, and raw materials were charged as described below, and then agitation was carried out at room temperature for 4 hours, and then a light yellow solution containing 25% by weight of polyamide acid (hereinafter, referred to also as "ink E-1") was obtained.
BPDA-H: 0.8243 g
BAPP: 3.3140 g
BAPEE: 1.7785 g
MA: 1.5832 g
DMSO: 4.50 g
GBL: 18.00 g

Weight average molecular weight (Mw) of polyamide acid obtained was 3,608, viscosity thereof was 11.28 mPa·s, and surface tension thereof was 44.4 mN/m. With regard to stability during cold storage, a solvent was not frozen and an insoluble matter was not formed, and thus the ink was stable, and rated to be good. Moreover, an impurity or the like was not precipitated, and a state of precipitation of a component of the ink was rated to be good.

### Examples 21 to 31

Inks were obtained under conditions similar to the conditions in Example 20 except that raw materials shown in Table 3 were used. Results of evaluation of each ink (E-2 and E-3, F-1 to F-3, G1 to G3 and H1 to H3) are shown in Table 4.

**Table 3**

**Table 3**

| | | Components | | | | | | | Concentration | | |
|---|---|---|---|---|---|---|---|---|---|---|---|
| Example | Ink | Component (A) | | | | Solvent (B) | Solvent (C) | Solvent (D) | (A)¹⁾ Concentration | (B)²⁾ Concentration | (B)+ (C)³⁾ Concentration |
| Example 20 | E-1 | BPDA-H 0.8243g | BAPP 3.3140g | BAPEE 1.7785g | MA 1.5832g | DMSO 4.50g | GBL 18.00g | - | 25 | 20 | 100 |
| Example 21 | E-2 | BPDA-H 0.8243g | BAPP 3.3140g | BAPEE 1.7785g | MA 1.5832g | DMSO 4.50g | MTM 18.00g | - | 25 | 20 | 100 |
| Example 22 | E-3 | BPDA-H 0.8243g | BAPP 3.3140g | BAPEE 1.7785g | MA 1.5832g | DMSO 4.50g | EDM 15.75g | BC 2.25g | 25 | 22.2 | 90 |
| Example 23 | F-1 | BSAA 2.5294g | HFBAPP 1.3437g | P-1074 2.0916g | MA 0.6354g | DMSO 4.68g | GBL 18.72g | - | 22 | 20 | 100 |
| Example 24 | F-2 | BSAA 2.5294g | HFBAPP 1.3437g | P-1074 2.0916g | MA 0.6354g | DMSO 4.68g | MTM 18.72g | - | 22 | 20 | 100 |
| Example 25 | F-3 | BSAA 2.5294g | HFBAPP 1.3437g | P-1074 2.0916g | MA 0.6354g | DMSO 4.68g | EDM 16.38g | BC 2.34g | 22 | 22.2 | 90 |
| Example 26 | G-1 | 6FDA 0.9220g | IPDA 0.7776g | P-1074 2.0098g | TESA 3.7906g | DMSO 4.50g | GBL 18.00g | - | 25 | 20 | 90 |
| Example 27 | G-2 | 6FDA 0.9220g | IPDA 0.7776g | P-1074 2.0098g | TESA 3.7906g | DMSO 4.50g | MTM 18.00g | - | 25 | 20 | 100 |
| Example 28 | G-3 | 6FDA 0.9220g | IPDA 0.7776g | P-1074 2.0098g | TESA 3.7906g | DMSO 4.50g | EDM 15.75g | BC 2.25g | 25 | 22.2 | 90 |
| Example 29 | H-1 | 6FDA 3.8704g | DDS 0.4327g | P-1074 0.6250g | APSE 2.5719g | DMSO 4.50g | GBL 18.00g | - | 25 | 20 | 100 |
| Example 30 | H-2 | 6FDA 3.8704g | DDS 0.4327g | P-1074 0.6250g | APSE 2.5719g | DMSO 4.50g | MTM 18.00g | - | 25 | 20 | 100 |
| Example 31 | H-3 | 6FDA 3.8704g | DDS 0.4327g | P-1074 0.6250g | APSE 2.5719g | DMSO 4.50g | EDM 15.75g | BC 2.25g | 25 | 22.2 | 90 |

| | | | | | | | | | | | |
|---|---|---|---|---|---|---|---|---|---|---|---|
| 1) Weight percent of component (A) based on 100% by weight of an inkjet ink. 2) Weight percent of solvent (B) based on 100% by weight of a total of solvent (B) and solvent (C). 3) Weight percent of a total of solvent (B) and solvent (C) based on 100% by weight of a total of solvent (B), solvent (C) and solvent (D). | | | | | | | | | | | |

**Table 4**

**Table 4**

| Ink | Concentration | | | Weight average molecular weight | Viscosity (mPa·s) | Surface tension (mN/m) | Cold storage stability | Precipitation of component |
|---|---|---|---|---|---|---|---|---|
| | (A)¹⁾ Concentration | (B)²⁾ Concentration | (B)+(C)³⁾ Concentration | | | | | |
| E-1 | 25 | 20 | 100 | 3,608 | 11.28 | 44.4 | Good | Good |
| E-2 | 25 | 20 | 100 | 3,901 | 13.43 | 32.9 | Good | Good |
| E-3 | 25 | 22.2 | 90 | 4,423 | 9.73 | 28.8 | Good | Good |
| F-1 | 22 | 20 | 100 | - | 16.67 | - | Good | Good |
| F-2 | 22 | 20 | 100 | - | 21.99 | - | Good | Good |
| F-3 | 22 | 22.2 | 90 | - | 14.20 | - | Good | Good |
| G-1 | 25 | 20 | 100 | - | 13.50 | - | Good | Good |
| G-2 | 25 | 20 | 100 | - | 11.91 | - | Good | Good |
| G-3 | 25 | 22.2 | 90 | - | 8.34 | - | Good | Good |
| H-1 | 25 | 20 | 100 | - | 13.02 | - | Good | Good |
| H-2 | 25 | 20 | 100 | - | 14.52 | - | Good | Good |
| H-3 | 25 | 22.2 | 90 | - | 11.07 | - | Good | Good |

| | | | | | | | | |
|---|---|---|---|---|---|---|---|---|
| 1) Weight percent of component (A) based on 100% by weight of an inkjet ink. 2) Weight percent of solvent (B) based on 100% by weight of a total of solvent (B) and solvent (C). 3) Weight percent of a total of solvent (B) and solvent (C) based on 100% by weight of a total of solvent (B), solvent (C) and solvent (D). | | | | | | | | |

As is clear from the results of the Examples and the Comparative Examples described above, the inks in the Examples were stable without causing freezing the solvent or precipitation of the insoluble matter.

On the other hand, the inks according to the Comparative Examples had problems, such as freezing part of inks in evaluation of cold storage stability or formation of the insoluble matter to fail in obtaining the homogeneous solution.

### Example 32

When as aspect of jetting ink A-1 was confirmed by using an inkjet coater DMP-2831 made by FUJIFILM Dimatix, Inc. under jetting conditions of 10 pL inkjet heads (DMC-11610, made by FUJIFILM Dimatix, Inc.), a jetting voltage (piezovoltage) of 20 V, a head temperature of 30°C and a driving frequency of 10 kHz, the ink was jetted from all of 16 nozzles arranged in parallel. The aspect of jetting the ink from the nozzles was observed by means of a camera built in the inkjet coater.

Subsequently, when the ink was jetted again after stopping jetting for 1 minute, jetting was allowed from all of 16 nozzles without generating plugging or the like. Furthermore, a similar aspect was observed when the ink was jetted again after stopping jetting for 5 minutes and 10 minutes, respectively, and thus the ink was confirmed to show a good jettability as the inkjet ink.

Patterned coating (lines having a length of 5 cm with an interval of 150 micrometers) was made on a glass substrate having a thickness of 0.8 mm under the jetting conditions. In addition, coating was made two times.

After coating the ink, the resultant substrate with ink was placed on a hot plate at 80°C to dry the ink for 5 minutes. Then, a substrate with ink after drying was heated for 30 minutes in an oven at 230°C, and a line-shaped polyimide film was obtained.

As is clear from the results of the Examples, the inkjet ink of the invention has an excellent jettability, and can easily form a desired patterned polyimide film.

### Industrial Applicability

An ink of the invention can be suitably used, for example, as an insulating film for a printed-circuit board and an insulating film for a semiconductor device, and also as a material for forming an electronic component.

## Claims

1. An inkjet ink, comprising component (A) containing at least one kind of amide acid derivative selected from the group of compound (1) having a constitutional unit represented by formula (1a) below and having at least one kind of molecular terminal group selected from the group of groups represented by formulas (1b) and (1c) below, and compounds represented by formulas (2) to (5) below, or an imidized substance of the amide acid derivative, and solvent (B) and solvent (C), wherein solvent (B) is dimethyl sulfoxide,
solvent (C) is at least one kind of solvent selected from diethylene glycol ethylmethyl ether, triethylene glycol dimethyl ether and γ-butyrolactone, and
solvent (B) is contained in the range of 10 to 30% by weight based on 100% by weight of a total of solvent (B) and solvent (C): 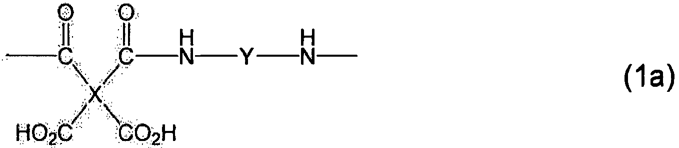 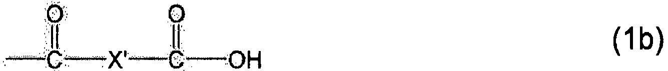 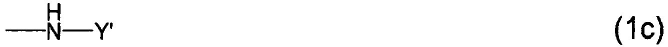 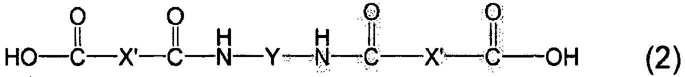 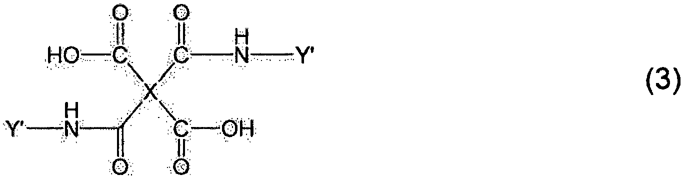 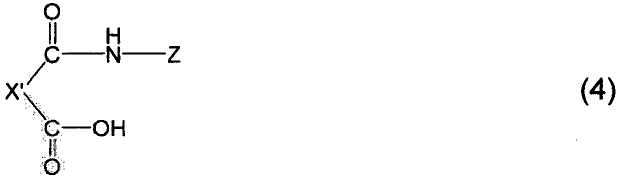 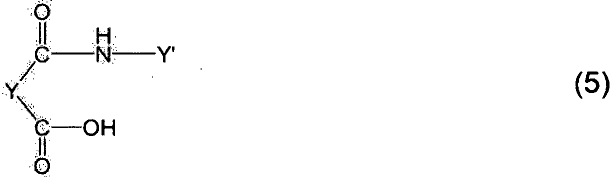 wherein,
in formulas (1a) and (3), X is each independently carbon or an organic group having 2 to 100 carbons,
in formulas (1a), (2) and (5), Y is each independently an organic group having 1 to 100 carbons,
in formula (4), Z is an organic group having 1 to 100 carbons,
in formulas (1b), (2) and (4), X' is each independently an organic group having 1 to 100 carbons, and
in formulas (1c), (3) and (5), Y' is each independently an organic group having 1 to 100 carbons.

2. The inkjet ink according to claim 1, wherein the compound (1) is at least one kind of compound selected from the group of compounds represented by formulas (1-1) to (1-3) below: 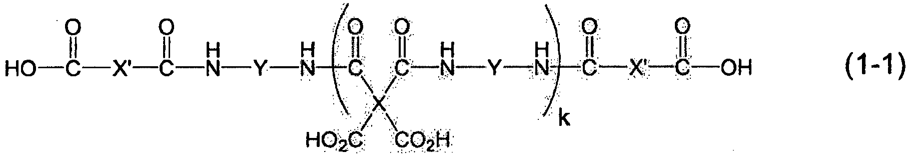 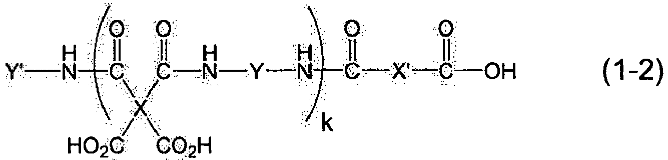 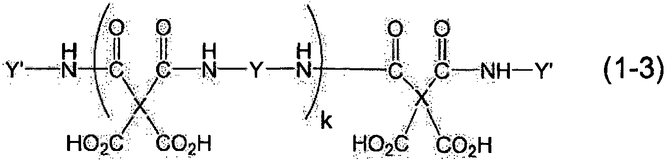 wherein,
in formulas (1-1) to (1-3), X is each independently carbon or an organic group having 2 to 100 carbons,
in formulas (1-1) to (1-3), Y is each independently an organic group having 1 to 100 carbons,
in formulas (1-1) and (1-2), X' is each independently an organic group having 1 to 100 carbons,
in formulas (1-2) and (1-3), Y' is each independently an organic group having 1 to 100 carbons, and
in formulas (1-1) to (1-3), k is each independently an integer from 1 to 8.

3. The inkjet ink according to claim 1 or 2, wherein
X' in the formulas (1b), (2), (4), (1-1) and (1-2) is each independently an organic group having an unsaturated hydrocarbon group and having 2 to 100 carbons, or an organic group represented by formula (α) below, and
Y' in formulas (1c), (3), (5), (1-2) and (1-3) below is each independently an organic group having an unsaturated hydrocarbon group and having 2 to 100 carbons, or an organic group represented by formula (β) below: 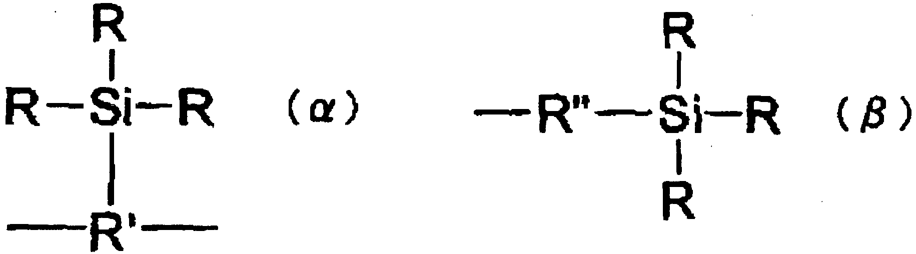
wherein, in formulas (α) and (β), R is each independently hydrogen, alkyl having 1 to 20 carbons or alkoxy having 1 to 20 carbons, in formula (α), R' is an organic group having 1 to 20 carbons, and in formula (β), R" is an organic group having 1 to 20 carbons.

4. The inkjet ink according to any one of claims 1 to 3, further containing solvent (D) other than solvent (B) and solvent (C).

5. The inkjet ink according to any one of claims 1 to 4, wherein the component (A) is contained in an amount in the range of 5 to 95% by weight based on 100% by weight of the inkjet ink.

6. A method for manufacturing a polyimide film, comprising a step for forming a coat by coating the inkjet ink according to any one of claims 1 to 5 on a support according to an inkjet method, and a step for forming the polyimide film by curing the coat.

7. The method according to claim 6, wherein the polyimide film is patterned.

## Patentansprüche

1. Tintenstrahldruckfarbe, die Folgendes umfasst: Komponente (A), die zumindest eine aus der Gruppe der Verbindung (1), die eine durch die nachstehende Formel (1a) dargestellte Grundeinheit aufweist und die zumindest eine aus der Gruppe der durch die nachstehenden Formeln (1b) und (1c) dargestellten Gruppen ausgewählte Art von molekularer Endgruppe aufweist, sowie der durch die nachstehenden Formeln (2) bis (5) dargestellten Verbindungen oder einer imidierten Substanz des Amidsäurederivats ausgewählte Art von Amidsäurederivat enthält, und Lösungsmittel (B) und Lösungsmittel (C), worin Lösungsmittel (B) Dimethylsulfoxid ist, Lösungsmittel (C) zumindest eine aus Diethylenglykolethylmethylether, Triethylenglykoldimethylether und γ-Butyrolacton ausgewählte Art von Lösungsmittel ist und Lösungsmittel (B) im Bereich von 10 bis 30 Gew.-%, bezogen auf 100 Gew.-% der Gesamtheit von Lösungsmittel (B) und Lösungsmittel (C), enthalten ist: 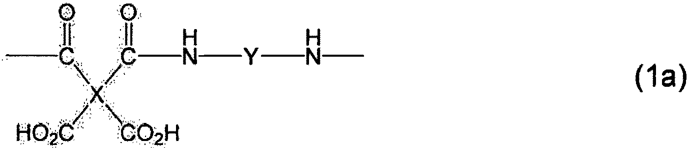 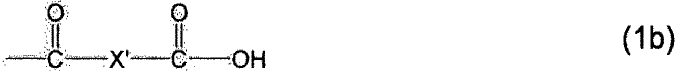 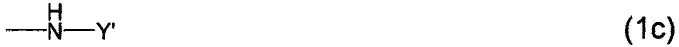 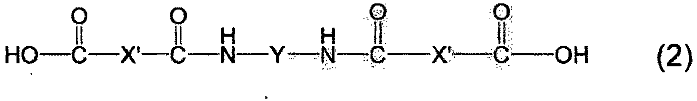 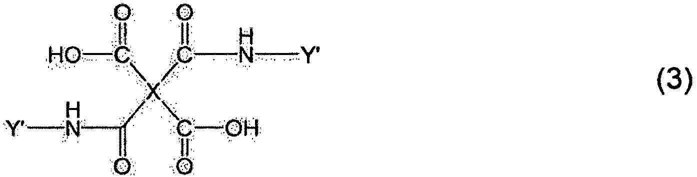 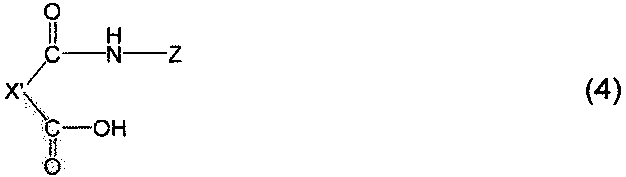 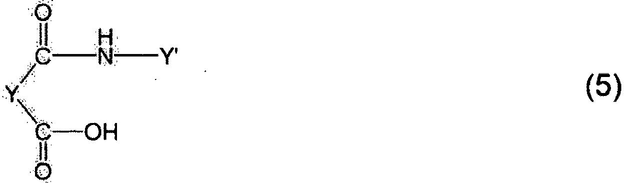 worin
in den Formeln (1a) und (3) X jeweils unabhängig Kohlenstoff oder eine organische Gruppe mit 2 bis 100 Kohlenstoffatomen ist,
in den Formeln (1a), (2) und (3) Y jeweils unabhängig eine organische Gruppe mit 1 bis 100 Kohlenstoffatomen ist,
in Formel (4) Z eine organische Gruppe mit 1 bis 100 Kohlenstoffatomen ist,
in den Formeln (1 b), (2) und (4) X' jeweils unabhängig eine organische Gruppe mit 1 bis 100 Kohlenstoffatomen ist und
in den Formeln (1 c), (3) und (5) Y' jeweils unabhängig eine organische Gruppe mit 1 bis 100 Kohlenstoffatomen ist.

2. Tintenstrahldruckfarbe nach Anspruch 1, worin die Verbindung (1) zumindest eine aus der aus durch die nachstehenden Formeln (1-1) bis (1-3) dargestellten Verbindungen bestehenden Gruppe ausgewählte Art von Verbindung ist: 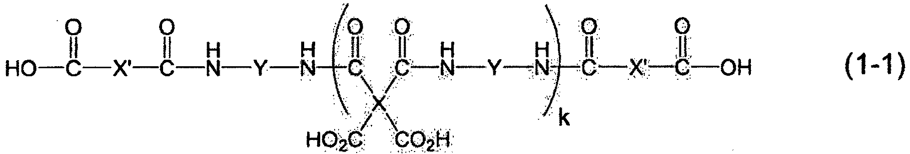 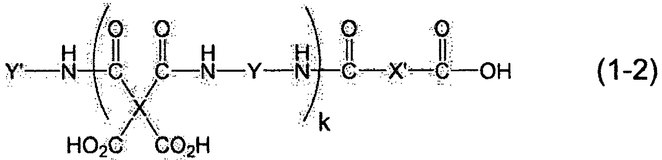 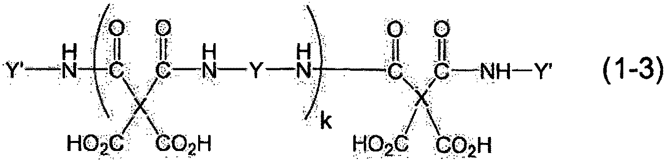 worin
in den Formeln (1-1) bis (1-3) X jeweils unabhängig Kohlenstoff oder eine organische Gruppe mit 2 bis 100 Kohlenstoffatomen ist,
in den Formeln (1-1) bis (1-3) Y jeweils unabhängig eine organische Gruppe mit 1 bis 100 Kohlenstoffatomen ist,
in den Formeln (1-1) und (1-2) X' jeweils unabhängig eine organische Gruppe mit 1 bis 100 Kohlenstoffatomen ist,
in den Formeln (1-2) und (1-3) Y' jeweils unabhängig eine organische Gruppe mit 1 bis 100 Kohlenstoffatomen ist und
in den Formeln (1-1) bis (1-3) k jeweils unabhängig eine ganze Zahl von 1 bis 8 ist.

3. Tintenstrahldruckfarbe nach Anspruch 1 oder 2, worin
X' in den Formeln (1 b), (2), (4), (1-1) und (1-2) jeweils unabhängig eine organische Gruppe mit einer ungesättigten Kohlenwasserstoffgruppe und 2 bis 100 Kohlenstoffatomen oder eine durch die nachstehende Formel (α) dargestellte organische Gruppe ist und
Y' in den nachstehenden Formeln (1c), (3), (5), (1-2) und (1-3) jeweils unabhängig eine organische Gruppe mit einer ungesättigten Kohlenwasserstoffgruppe und 2 bis 100 Kohlenstoffatomen oder eine durch die nachstehende Formel (β) dargestellte organische Gruppe ist: 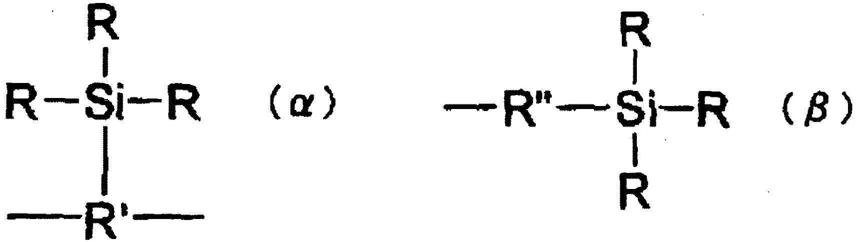 worin in den Formeln (α) und (β) R jeweils unabhängig Wasserstoff, Alkyl mit 1 bis 20 Kohlenstoffatomen oder Alkoxy mit 1 bis 20 Kohlenstoffatomen ist, in (α) R' eine organische Gruppe mit 1 bis 20 Kohlenstoffatomen ist und in Formel (β) R" eine organische Gruppe mit 1 bis 20 Kohlenstoffatomen ist.

4. Tintenstrahldruckfarbe nach einem der Ansprüche 1 bis 3, die des Weiteren ein Lösungsmittel (D) enthält, das anders ist als das Lösungsmittel (B) und das Lösungsmittel (C).

5. Tintenstrahldruckfarbe nach einem der Ansprüche 1 bis 4, worin die Komponente (A) in einer Menge im Bereich von 5 bis 95 Gew.-%, bezogen auf 100 Gew.-% der Tintenstrahldruckfarbe, enthalten ist.

6. Verfahren zur Herstellung eines Polyimidfilms, das einen Schritt des Ausbildens eines Überzugs durch Überziehen eines Trägers mit einer Tintenstrahldruckfarbe nach einem der Ansprüche 1 bis 5 gemäß einem Tintenstrahlverfahren und einen Schritt des Ausbildens des Polyimidfilms durch Härten des Überzugs umfasst.

7. Verfahren nach Anspruch 6, worin der Polyimidfilm strukturiert ist.

## Revendications

1. Encre pour jet d'encre, comprenant un composant (A) contenant au moins un type de dérivé d'acide d'amide choisi dans le groupe du composé (1) ayant un motif constitutionnel représenté par la formule (1a) ci-dessous et ayant au moins un type de groupe terminal moléculaire choisi dans le groupe constitué par les groupes représentés par les formules (1b) et (1c) ci-dessous, et des composés représentés par les formules (2) à (5) ci-dessous, ou une substance imidisée du dérivé d'acide d'amide, et un solvant (B) et un solvant (C), dans laquelle le solvant (B) est le diméthylsulfoxyde et le solvant (C) est au moins un type de solvant choisi parmi l'éther éthyméthylique de diéthylène glycol, l'éther diméthylique de triéthylène glycol et la γ-butyrolactone, et
le solvant (B) est contenu dans la plage allant de 10 à 30 % en poids par rapport à 100 % en poids du total de solvant (B) et de solvant (C) : 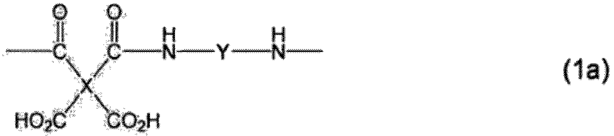 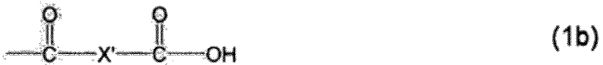 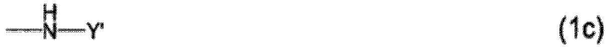 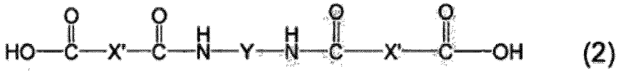 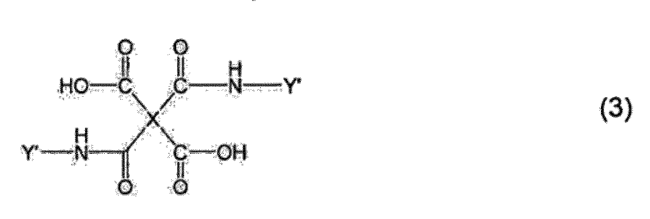 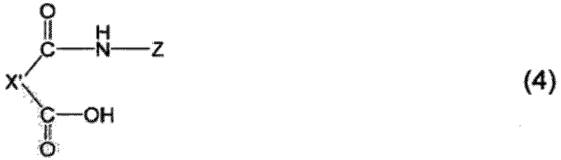 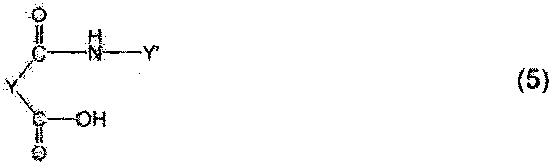 dans laquelle
dans les formules (1a) et (3), chaque X est indépendamment un atome de carbone ou un groupe organique ayant de 2 à 100 atomes de carbone,
dans les formules (1a), (2) et (5), chaque Y est indépendamment un groupe organique ayant de 1 à 100 atomes de carbone,
dans la formule (4), Z est un groupe organique ayant de 1 à 100 atomes de carbone,
dans les formules (1b), (2) et (4), chaque X' est indépendamment un groupe organique ayant de 1 à 100 atomes de carbone, et
dans les formules (1c), (3) et (5), chaque Y' est indépendamment un groupe organique ayant de 1 à 100 atomes de carbone.

2. Encre pour jet d'encre selon la revendication 1, dans laquelle le composé (1) est au moins un type de composé choisi dans le groupe de composés représentés par les formules (1-1) à (1-3) ci-dessous : 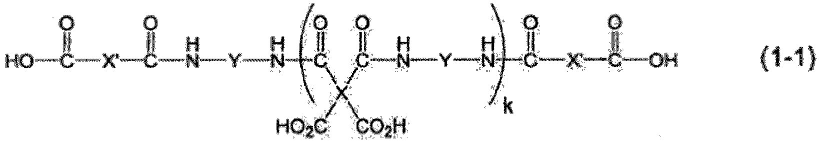 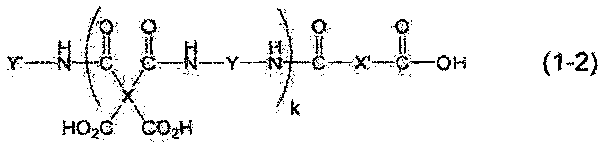 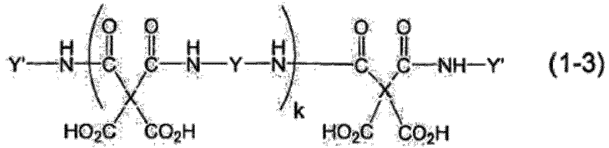 dans laquelle
dans les formules (1-1) à (1-3), chaque X est indépendamment un atome de carbone ou un groupe organique ayant de 2 à 100 atomes de carbone,
dans les formules (1-1) à (1-3), chaque Y est indépendamment un groupe organique ayant de 1 à 100 atomes de carbone,
dans les formules (1-1) et (1-2), chaque X' est indépendamment un groupe organique ayant de 1 à 100 atomes de carbone,
dans les formules (1-2) et (1-3), chaque Y' est indépendamment un groupe organique ayant de 1 à 100 atomes de carbone, et
dans les formules (1-1) à (1-3), k est indépendamment un nombre entier de 1 à 8.

3. Encre pour jet d'encre selon la revendication 1 ou 2, dans laquelle
chaque X' dans les formules (1b), (2), (4), (1-1) et (1-2) est indépendamment un groupe organique ayant un groupe hydrocarboné insaturé et ayant de 2 à 100 atomes de carbone, ou un groupe organique représenté par la formule (α) ci-dessous, et chaque Y' dans les formules (1c), (3), (5), (1-2) et (1-3) ci-dessous est indépendamment un groupe organique ayant un groupe hydrocarboné insaturé et ayant de 2 à 100 atomes de carbone ou un groupe organique représenté par la formule (β) ci-dessous : 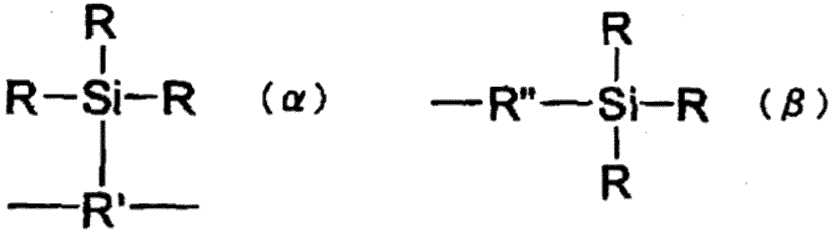 dans laquelle, dans les formules (α) et (β), chaque R est indépendamment un atome d'hydrogène, un groupe alkyle ayant de 1 à 20 atomes de carbone ou un groupe alcoxy ayant de 1 à 20 atomes de carbone, dans la formule (α), R' est un groupe organique ayant de 1 à 20 atomes de carbone, et dans la formule (β), R" est un groupe organique ayant de 1 à 20 atomes de carbone.

4. Encre pour jet d'encre selon l'une quelconque des revendications 1 à 3, contenant en outre un solvant (D) autre que le solvant (B) et le solvant (C).

5. Encre pour jet d'encre selon l'une quelconque des revendications 1 à 4, dans laquelle le composant (A) est contenu en une quantité comprise dans la plage allant de 5 à 95 % en poids par rapport à 100 % en poids de l'encre pour jet d'encre.

6. Procédé de fabrication d'un film de polyimide, comprenant une étape de formation d'un revêtement par revêtement de l'encre pour jet d'encre selon l'une quelconque des revendications 1 à 5 sur un support selon un procédé de jet d'encre, et une étape de formation du film de polyimide par durcissement du revêtement.

7. Procédé selon la revendication 6, dans lequel le film de polyimide est à motifs.
